# EUROPEAN PATENT SPECIFICATION

(11) **EP 2 486 274 B1**
(45) Date of publication and mention of the grant of the patent: **20.01.2016**
(21) Application number: 11799882.3
(22) Date of filing: 30.11.2011
(51) Int. Cl.: F16H 39/02, F03D 11/02, F03D 9/00

(54) **POWER GENERATING APPARATUS OF RENEWABLE ENERGY TYPE AND OPERATION METHOD THEREOF**
VORRICHTUNG ZUR STROMERZEUGUNG AUS ERNEUERBARER ENERGIE UND BETRIEBSVERFAHREN DAFÜR
APPAREIL DE PRODUCTION D'ÉNERGIE DU TYPE À ÉNERGIE RENOUVELABLE ET PROCÉDÉ DE FONCTIONNEMENT ASSOCIÉ

(30) Priority: 30.11.2010 GB 201020264; 30.11.2010 GB 201020263; 30.11.2010 WO PCT/JP2010/006977; 30.11.2010 WO PCT/JP2010/006978; 30.11.2010 WO PCT/JP2010/006979; 30.11.2010 WO PCT/JP2010/006982; 30.11.2010 WO PCT/JP2010/006981; 18.02.2011 WO PCT/JP2011/000920; 18.02.2011 WO PCT/JP2011/000917; 30.05.2011 WO PCT/JP2011/003002; 30.05.2011 WO PCT/JP2011/003005; 30.05.2011 WO PCT/JP2011/003000
(43) Date of publication of application: 15.08.2012
(73) Proprietor: MITSUBISHI HEAVY INDUSTRIES, Ltd., Tokyo 108-8215 (JP)
(72) Inventor: HASHIMOTO, Jun, Tokyo 108-8215 (JP); WAKASA, Tsuyoshi, Tokyo 108-8215 (JP); BALDINI, Francesco, London, Greater London W1K 6WL (GB); CALDWELL, Niall, Midlothian, Lothian EH20 9TB (GB); TAYLOR, Jamie, Midlothian, Lothian EH20 9TB (GB); DUMNOV, Daniil, Midlothian, Lothian EH20 9TB (GB)
(74) Representative: Intès, Didier Gérard André
(86) International application number: PCT/JP2011/006694
(87) International publication number: WO 2012/073504

(56) References cited:
- EP-A1- 0 020 207
- WO-A2-2008/113699
- WO-A2-2010/085988
- GB-A- 2 463 647

## Description

### Technical Field

The present invention relates to a power generating apparatus of renewable energy type, which generates power by transmitting rotation energy of a rotating shaft to a generator via a hydraulic transmission and supplies the power to a grid, and an operation method of the power generating apparatus of renewable energy type. The power generating apparatus of renewable energy type generates power from a renewable energy such as wind, tidal current, ocean current and river current and, for instance, includes a wind turbine generator, a tidal generator, an ocean current generator, a river current generator or the like.

### Background Art

In recent years, from a perspective of preserving the environment, it is becoming popular to use a power generating apparatus of renewable energy type such as a wind turbine generator utilizing wind power and renewable energy type turbine generator such as a tidal current generator utilizing tidal. In the power generating apparatus of renewable energy type, a motion energy of the wind, the tidal current, the ocean current or the river current is converted into the rotation energy of the rotor (a rotating shaft) and the rotation energy of the rotor is converted into electric power by the generator.

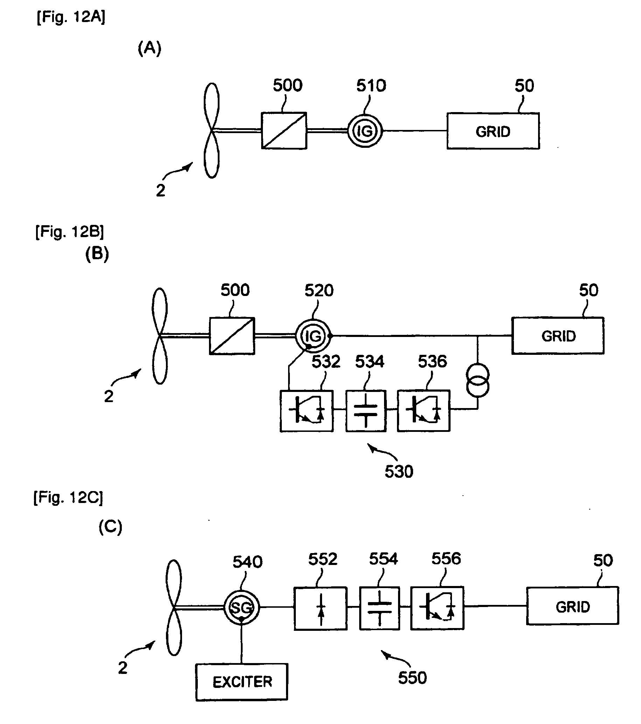

In this type of the power generating apparatus of renewable energy type, the generator is normally connected to the grid. In the case of the wind turbine generator, the connection between the generator and grid is categorized according to a type of the generator and a connection to the grid, for instance, as shown in FIG.12A to FIG. 12C.

In a type shown in FIG.12A, a squirrel case induction generator 510 is connected to a rotor 2 via a step-up gear 500. The squirrel case induction generator 510 is directly connected to the grid 50 via a soft starter. According to the type, electronic devices are simple and inexpensive. However, a frequency of the grid 50 is fixed and thus, the rotation speed of the rotor 2 is fixed as well. Therefore, a change in the wind power is directly reflected in a change of the output power. Further, it is known that the rotation speed of the rotor at which a power coefficient Cp becomes maximum varies depending on the wind speed. From a perspective of enhancing power generation efficiency, it is not preferable to fix the rotation speed of the rotor 2 regardless of the wind speed.

In view of this, wind turbine generators being capable of variable speed operation are proposed by adopting methods as show in FIG.12B and FIG.12C are proposed.

In the wind turbine generator of the type shown in FIG.12B, a secondary wound-rotor induction generator 520 is connected to the rotor via the step-up gear 500. The secondary wound-rotor induction generator 520 has a stator winding which is directly connected to the grid 50 and a rotor winding which is connected to the grid 50 via an AC-DC-AC converter 530. The AC-DC-AC converter 530 is formed by a generator-side inverter 532, a DC bus 534 and a grid-side inverter 536. The generator-side inverter 532 achieves a variable speed operation by controlling an electric current to the rotor winding to adjust a generator torque. Meanwhile, the grid-side inverter 536 converts the electric power received from the rotor winding of the secondary wound-rotor induction generator into AC power which conforms to a frequency of the grid.

In the wind turbine generator of the type shown in FIG.12C, a synchronous generator 540 is connected to the rotor 2. The synchronous generator 540 is connected to the grid via an AC-DC-AC link 550. The AC-DC-AC link 550 is formed by a converter 552, a DC bus 554 and an inverter 556. The AC-DC-AC link 550 achieves the variable speed operation by adjusting the torque of the synchronous generator 540 and also converts the electric power generated in the synchronous generator 540 into AC power which conforms to the frequency of the grid 50.

In recent years, power generating apparatuses of renewable energy type using a hydraulic transmission including a hydraulic pump and a hydraulic motor are attracting more attentions.

For instance, Patent Literature 1 discloses a wind turbine generator using a hydraulic transmission including a hydraulic pump rotated by a rotor and a hydraulic motor connected to a generator. In the hydraulic transmission of this wind turbine generator, the hydraulic pump and the hydraulic motor are connected via a high-pressure reservoir and a low-pressure reservoir. By this, the rotation energy of the rotor is transmitted to the generator via the hydraulic transmission. Further, the hydraulic pump is constituted of a plurality of sets of pistons and cylinders, and cams which periodically reciprocate the pistons in the cylinders.

Although not directly related to a variable-speed operation technology or a grid connection technology of the power generating apparatus of renewable energy type, there is an operation technology of a wind turbine generator when a grid voltage drops due to lightening strike and a failure of a transmission facility such as falling of a steel tower (See Patent Literatures 2 through 9).

Although not directly related to a variable-speed operation technology or a grid connection technology of the power generating apparatus of renewable energy type, there are know technology to suppress a generator swing when the grid voltage drops by means of a high initial response excitation system and a power system stabilizer (See Non-Patent Literature 1). The "swing" of the generator means an oscillation of an internal phase angle of the synchronous generator connected to the grid. The high initial response excitation system is an excitation system which promptly detects voltage decline of the generator terminal, immediately increases field current, raises internal induced voltage of the generator to increase synchronizing power so as to suppress a first-wave swing of the generator when a major disturbance occurs at the grid such as a short-circuit fault and a grounding fault. Further, the power system stabilizer is a device which suppresses the generator swing promptly by controlling the exciter to increase a damping torque in order to improve steady-state stability which declines by using the high initial response excitation system. WO 2008/113699 discloses an energy conversion device with hydraulic drive according to the preamble of claim 1. WO 2010/085988 discloses a wind turbine with Low Voltage Ride-Through capabilities.

### Citation List

### Patent Literature

PTL 1: US 2010/0032959
PTL 2: CN 101964533 A
PTL 3: US 2011/0025059
PTL 4: WO 2010/085988
PTL 5: KR 10-0947075 B
PTL 6: WO 2009/078072
PTL 7: CN 101383580 A
PTL 8: US 7709972
PTL 9: JP2007-239599 A

### Non Patent Literature

NPL 1: "V. SUPERQUICK EXCITATION CONTROL SYSTEM" by Hiroshi YABE, Akira NISHIMURA Journal of Institute of Electrical Engineers, The institute of Electrical Engineers of Japan, published July 20th of 1986, Vol. 106,7th issue, p.643 to 645

### Summary of Invention

### Technical Problem

As described above, in the existing power generating apparatuses of renewable energy type, the systems shown in FIG.12B and FIG.12C are established as a technique to achieve both the variable speed operation and the grid connection. On the other hand, in the power generating apparatuses of renewable energy type which are drawing attention recently such as the one disclosed in Patent Literature 1, the technology to achieve both the variable speed operation and the grid connection is hardly established.

In the systems show in FIG.12B and FIG.12C, expensive frequency converting circuits (530, 550) must be provided to achieve the variable speed operation and the grid connection. This poses a barrier to a cost reduction.

In view of the above issues, it is an object of the present invention is to provide a power generating apparatus of renewable energy type which can achieve both the variable speed operation and the grid connection without a frequency converting circuit and which uses a hydraulic transmission, and an operation method of the power generating apparatus of renewable energy type.

The present invention is defined by the appended claims. An embodiment provides a power generating apparatus of renewable energy type which generates power using renewable energy which includes, but is not limited to:
a blade;
a rotating shaft which is rotated by the renewable energy received via the blade;
a hydraulic transmission which includes a hydraulic pump driven by the rotating shaft and a hydraulic motor driven by pressurized oil supplied from the hydraulic pump;
a synchronous generator which is driven by the hydraulic motor to generate power and coupled to a grid without an intervening frequency-conversion circuit, the generated power being supplied to the grid;
a transmission controller which controls the hydraulic transmission in a normal operation mode to adjust displacement of each of the hydraulic pump and the hydraulic motor such that the rotating shaft rotates at a rotational speed that is variable with respect to flow speed of the renewable energy while keeping a rotational speed of the synchronous generator at a synchronous speed based on frequency of the grid during normal operation of the power generating apparatus.

The "renewable energy" indicates, for instance, wind in the case where the power generating apparatus of renewable energy is a wind turbine generator. In such case, the "flow speed of the renewable energy" is a wind speed.

In the power generating apparatus of renewable energy type, the synchronous generator which is connected to the grid without a frequency converting circuit is used as a generator. Thus, it is now possible to achieve both the variable speed operation and the grid connection in the normal operation by means of the transmission controller without relying on the frequency converting circuit. Specifically, the transmission controller adjusts displacement of each of the hydraulic pump and the hydraulic motor such that the rotating shaft rotates at a rotational speed that is variable with respect to flow speed of the renewable energy while keeping the rotational speed of the synchronous generator at the synchronous speed based on frequency of the grid so as to achieve both the variable speed operation and the grid connection.

In the above power generating apparatus of renewable energy type, the transmission controller includes, but is not limited to:
a target torque determination unit which, in the normal operation mode determines a target torque of the hydraulic pump based on an optimal torque of the rotating shaft in accordance with the flow speed of the renewable energy;
a pump demand determination unit which, in the normal operation mode, determines a demand D_{P} of the displacement of the hydraulic pump from the target torque of the hydraulic pump; and
a pump control unit which adjusts the displacement of the hydraulic pump at the demand D_{P}.
By this, the target torque of the hydraulic pump is determined based on the optimal torque in accordance with the flow speed of the renewable energy, e.g. the wind speed, and the displacement of the hydraulic pump is adjusted at the demand D_{P} of the displacement determined from the target torque. By this, the rotation speed of the rotating shaft can be variable with respect to the flow speed of the renewable energy. In other words, by means of the transmission controller, the variable speed operation of the power generating apparatus of renewable energy type can be achieved.

In the above power generating apparatus of renewable energy type, the transmission controller may include, but is not limited to:
a motor target power determination unit which determines a target output power POWER_{M} of the hydraulic motor based on a target output power POWER_{P} of the hydraulic pump;
a motor demand determination unit which, in the normal operation mode, determines a demand D_{M} of the displacement of the hydraulic motor based on the determined target output power POWER_{M} such that the synchronous generator rotates at the synchronous speed; and
a motor control unit which adjusts the displacement of the hydraulic motor at the demand D_{M}.

By this, the displacement of the hydraulic motor is adjusted to the demand D_{M} of the displacement of the hydraulic motor determined based on the determined target output power POWER_{M} such that the synchronous generator rotates at the synchronous speed and thus, the rotation speed of the synchronous generator can be maintained at a synchronous speed. In other words, the synchronous generator can be connected to the grid by means of the transmission controller.

To do this, in the wind turbine generator 1, the transmission controller 40 controls the hydraulic transmission 10 to keep a rotational speed of the synchronous generator 20 at a synchronous speed based on frequency (e.g., 50 Hz or 60 Hz) of the grid 50. Specific control procedures of the transmission controller 40 are described later in detail.

The above power generating apparatus of renewable energy type may further include:
a terminal voltage detector which detects a terminal voltage of the synchronous generator;
an exciter which supplies a field current to a field winding of the synchronous generator; and
an exciter controller which controls the exciter based on a difference between the terminal voltage detected by the terminal voltage detector and a command value for the terminal voltage.
By adjusting the field current to be supplied to the field winding of the synchronous generator from the exciter, the terminal voltage of the synchronous generator can be maintained in accordance with the command value for the terminal voltage of the synchronous generator. Further, such control to maintain the terminal voltage may be performed by means of an automatic voltage regulator (AVR).

In the above power generating apparatus of renewable energy type, the exciter controller may control the exciter such that the field current is increased immediately after the terminal voltage of the synchronous generator decreases due to the fault event at the grid or a transmission line from the synchronous generator to the grid.

When the fault even occurs at the transmission line or the grid, the terminal voltage of the generator declines abruptly, instantly lowering an electrical output power (active power) of the generator. Thus, the mechanical input power from the hydraulic motor becomes excessive with respect to the electrical output power of the generator, causing the rotator of the synchronous generator to accelerate. This may result in step-out of the synchronous generator. Thus, by increasing the field current immediately after the terminal voltage of the synchronous generator decreases due to the fault event at the transmission line or the grid, the induced voltage inside the generator increases, causing the electrical output power of the generator to increase. Therefore, the synchronizing power of the synchronous generator 20 increases, suppressing the first-wave swing of the synchronous generator after the occurrence of the fault event. As a result, the transient ability is improved. In this manner, the step-out of the synchronous generator is prevented.

Further, the above control of the exciter to enhancing the transient stability can be preferably performed by a superquick excitation system which is an excitation system of an extremely fast response speed, such as a thyristor excitation system.

In the case of increasing the field current immediately after the terminal voltage decreases due to the occurrence of the fault event, after increasing the field current by the exciter, the exciter controller may control the exciter such that the field current is increased when an internal phase angle of the synchronous generator increases and is decreased when the internal phase angle of the synchronous generator decreases.

By increasing the field current immediately after the decline of the terminal voltage due to the fault event, the first-wave swing of the synchronous generator is suppressed as described above, hence improving the transient stability. However, the improved responsiveness may impair the steady-state stability after the first-wave swing. Therefore, the field current is increased when increasing the internal phase angle and the field current is reduced when reducing the field current so as to suppress the swing of the synchronous generator promptly and to improve the steady-state stability. The above control of the exciter to improve the steady-state stability is preferably achieved by means of the power system stabilizer (PSS).

Further, when the terminal voltage of the synchronous generator decreases due to the fault event at the transmission line or the grid, the transmission controller may control the hydraulic transmission in a fault event response mode to adjust the displacement of the hydraulic motor such that a difference between a load torque of the synchronous generator and a torque inputted to the synchronous generator by the hydraulic motor decreases when a terminal voltage of the synchronous generator decreases due to the fault event at the transmission line from the synchronous generator to the grid or at the grid.

When the fault event occurs, the terminal voltage of the generator and the electrical output power of the synchronous generator decline almost simultaneously with the occurrence of the fault event Thus, an extremely prompt response to the fault event is needed to prevent the step-out of the synchronous generator. From this aspect, controlling the hydraulic motor in the normal operation mode is not enough to adjust the torque of the hydraulic motor in response to the sudden change of the torque of the generator. This causes an unbalance between the torque of the generator and the torque of the hydraulic motor, causing the internal phase angle of the internal synchronous to change significantly. Thus, in the fault event response mode, the displacement of the hydraulic motor is adjusted to reduce the difference between the torque of the generator and the torque of the hydraulic motor. This allows the torque of the hydraulic motor to follow the sudden change of the torque of the generator, thereby suppressing the change of the internal phase angle of the synchronous generator. As a result, the swing of the synchronous generator due to the fault event can be promptly suppressed.

In the case of adjusting the torque of the hydraulic motor in response to the change of the torque of the generator in the fault event response mode, the transmission controller may include:
a motor demand determination unit which, in the fault event response mode, determines a demand D_{M} of the displacement of the hydraulic motor based on the power generated by the synchronous generator; and
a motor control unit which adjusts the displacement of the hydraulic motor at the demand D_{M}.
In this manner, by adjusting the displacement of the hydraulic motor at the demand DM based on the power generated by the synchronous generator, it is possible to change the displacement of the hydraulic motor in response to the change of the power generated by the synchronous generator after the fault event, and to reduce the difference between the torque of the generator and the torque of the hydraulic motor.
As a result, the swing of the synchronous generator due to the fault even can be promptly suppressed.

In the case of adjusting the displacement of the hydraulic motor at the demand DM determined based on the power generated by the synchronous generator in the fault event response mode, the above power generating apparatus of renewable energy type may further include a pitch driving mechanism which adjusts a pitch angle of the blade and the pitch driving mechanism may change the pitch angle of the blade toward a feathering position during the fault event at the grid or the transmission line.

During the fault event, the terminal voltage of the synchronous generator decreases compared to that in the normal operation and thus, the electrical output power of the synchronous generator (the power generated by the synchronous generator) is small compared to that in the normal operation. Therefore, by adjusting the displacement of the hydraulic motor at the demand DM determined based on the power generated by the synchronous generator, the output power of the hydraulic motor declines, causing the output power of the hydraulic pump to be excessive. By changing the pitch angle of the blade toward the feather position by means of the pitch driving mechanism, the output power of the hydraulic pump can be restricted in response to the decline of the output power of the hydraulic motor while suppressing the acceleration of the hydraulic pump.

In the case of changing the pitch angle of the blade toward the feathering position during the fault event, after recovery from the fault event begins, the pitch driving mechanism changes the pitch angle of the blade toward a fine position and the motor demand determination unit increases the demand D_{M} of the displacement of the hydraulic motor to increase the power generated by the synchronous generator.

By this, after the recovery from the fault even starts, it is possible to generate more power by increasing the displacement of the hydraulic motor.

The fault event may be, for instance, a condition where a voltage of the grid drops to a voltage specified in grid code or lower.

In the above power generating apparatus of renewable energy type, the exciter controller may include a thyristor which excites a stator field of the exciter, and the exciter may be an AC exciter which is provided with the stator field excited by the thyristor and a rotor armature rotating with the shaft of the synchronous generator, the DC field current being supplied from the rotor armature to the field winding of the synchronous generator via a rotary rectifier.
In this manner, AC from the rotating armature of the AC exciter is rectified by the rotary rectifier and supplied to the field winding of the synchronous generator. By this, it is possible to achieve a brushless structure, hence eliminating the need for brush maintenance (periodic replacement of the brush). As the wind turbine generators are often installed in a remote area such as in mountains and offshore, the fact that there is no need for the brush maintenance (the periodic replacement of the brush) significantly contributes to reducing a running cost.

The above power generating apparatus of renewable energy type may further include an auxiliary exciter which includes a permanent magnetic generator attached to a common shaft with the synchronous generator, and the thyristor of the exciter controller may use the auxiliary exciter as power source and excite the stator field of the exciter.

In this manner, the PMG attached to a common shaft of the synchronous generator, is used as power source for the thyristor of the exciter controller so as to excite the synchronous generator without an external power source even before connecting to the power grid. This is extremely advantageous for the wind turbine generator, which normally has a difficulty in obtaining power from the external power source.

Further, the power generating apparatus may be a wind turbine generator which generates the power from wind as the renewable energy.

The present invention provides an operation method of a power generating apparatus of renewable energy type which may include: a rotating shaft rotated by renewable energy received via a blade; a hydraulic transmission which includes a hydraulic pump driven by the rotating shaft and a hydraulic motor driven by pressurized oil supplied from the hydraulic pump; and a synchronous generator which is driven by the hydraulic motor to generate power and coupled to a grid without an intervening frequency-conversion circuit, the generated power being supplied to the grid, and the operation method includes, but is not limited to, the steps of:
controlling the hydraulic transmission in a normal operation mode to adjust displacement of each of the hydraulic pump and the hydraulic motor such that the rotating shaft rotates at a rotational speed that is variable with respect to flow speed of the renewable energy while keeping a rotational speed of the synchronous generator at a synchronous speed based on frequency of the grid during normal operation of the power generating apparatus.

According to the operation method of the power generating apparatus of renewable energy type, the displacement of each of the hydraulic pump and the hydraulic motor is adjusted such that the rotating shaft rotates at a rotational speed that is variable with respect to flow speed of the renewable energy while keeping a rotational speed of the synchronous generator at a synchronous speed based on frequency of the grid during normal operation of the power generating apparatus. As a result, it is possible to achieve both the variable speed operation and the grid connection.

The above operation method of a power generating apparatus of renewable energy type may further include the step of:
increasing a field current to be supplied to a field winding of the synchronous generator immediately after a terminal voltage of the synchronous generator decreases due to a fault event at the grid or a transmission line from the synchronous generator to the grid.

When the fault even occurs at the transmission line or the grid, the terminal voltage of the generator declines abruptly, instantly lowering an electrical output power (active power) of the generator. Thus, the mechanical input power from the hydraulic motor becomes excessive with respect to the electrical output power of the generator, causing the rotator of the synchronous generator to accelerate. This may result in step-out of the synchronous generator. Thus, by increasing the field current immediately after the terminal voltage of the synchronous generator decreases due to the fault event at the transmission line or the grid, the induced voltage inside the generator increases, causing the electrical output power of the generator to increase. Therefore, the synchronizing power of the synchronous generator 20 increases, suppressing the first-wave swing of the synchronous generator after the occurrence of the fault event. As a result, the transient ability is improved. In this manner, the step-out of the synchronous generator is prevented.

The above operation method of a power generating apparatus of renewable energy type may further include the step of:
controlling the hydraulic transmission in a fault event response mode to adjust the displacement of the hydraulic motor such that a difference between a load torque of the synchronous generator and a torque inputted to the synchronous generator by the hydraulic motor decreases when a terminal voltage of the synchronous generator decreases due to the fault event at a transmission line from the synchronous generator to the grid or the grid.

When the fault event occurs, the terminal voltage of the generator and the electrical output power of the synchronous generator decline almost simultaneously with the occurrence of the fault event. Thus, an extremely prompt response to the fault event is needed to prevent the step-out of the synchronous generator. From this aspect, controlling the hydraulic motor in the normal operation mode is not enough to adjust the torque of the hydraulic motor in response to the sudden change of the torque of the generator. This causes an unbalance between the torque of the generator and the torque of the hydraulic motor, causing the internal phase angle of the internal synchronous to change significantly. Thus, in the fault event response mode, the displacement of the hydraulic motor is adjusted so as to reduce the difference between the torque of the generator and the torque of the hydraulic motor. This allows the torque of the hydraulic motor to follow the sudden change of the torque of the generator, thereby suppressing the change of the internal phase angle of the synchronous generator. As a result, the swing of the synchronous generator due to the fault event can be promptly suppressed.

### EFFECTS OF THE INVETION

According to the present invention, the displacement of each of the hydraulic pump and the hydraulic motor is adjusted such that the rotating shaft rotates at a rotational speed that is variable with respect to flow speed of the renewable energy while keeping a rotational speed of the synchronous generator at a synchronous speed based on frequency of the grid. As a result, it is possible to achieve both the variable speed operation and the grid connection without using the frequency converting circuit.

### Brief Description of Drawings

[fig.1]FIG.1 is a schematic view showing an example structure of a wind turbine generator.
[fig.2]FIG.2 shows a structure of a hydraulic transmission and a transmission controller of the wind turbine generator.
[fig.3]FIG.3 shows a specific example structure of a hydraulic pump.
[fig.4]FIG.4 shows a specific example structure of a hydraulic motor.
[fig.5]FIG.5 shows an example structure of a transmission line from the synchronous generator to the grid.
[fig.6]FIG.6 shows a signal flow of determining a displacement of the hydraulic pump in the transmission controller.
[fig.7]FIG.7 is a graph showing a maximum Cp curve with a rotation speed of a rotor, Wᵣ on a horizontal axis and rotor torque T on a vertical axis.
[fig.8]FIG.8 shows a signal flow of determining a displacement of the hydraulic motor in the transmission controller.
[fig.9]FIG.9 is a graph showing a relationship of an active power Pₑ and an internal phase angle A before and after occurrence of short-circuit fault.
[fig.10]FIG. 10 is a graph showing an example of change of each parameter over time when there is a fault event at the grid or the transmission line.
[fig.11]FIG.11 is a graph showing another example of change of each parameter over time when there is a fault event at the grid or the transmission line.
[fig.12A]FIG.12A shows an example of a conventional wind turbine generator.
[fig.12B]FIG.12B shows an example of a conventional wind turbine generator.
[fig.12C]FIG.12C shows an example of a conventional wind turbine generator.

### Description of Embodiments

Embodiments of the present invention will now be described in detail with reference to the accompanying drawings. It is intended, however, that unless particularly specified, dimensions, materials, shape, its relative positions and the like shall be interpreted as illustrative only and not limitative of the scope of the present invention.

While the present invention is described below with reference to exemplary embodiments, it is obvious to those skilled in the art that various changes may be made without departing from the scope of the invention.

In the following embodiments, a wind turbine generator is described as an example of the power generating apparatus of renewable energy type. However, the present invention is not limited to this example and can be applied to various types of power generating apparatuses of renewable energy type such as a tidal generator, an ocean current generator and a river current generator.

### (STRUCTURE OF WIND TURBINE GENERAOTR)

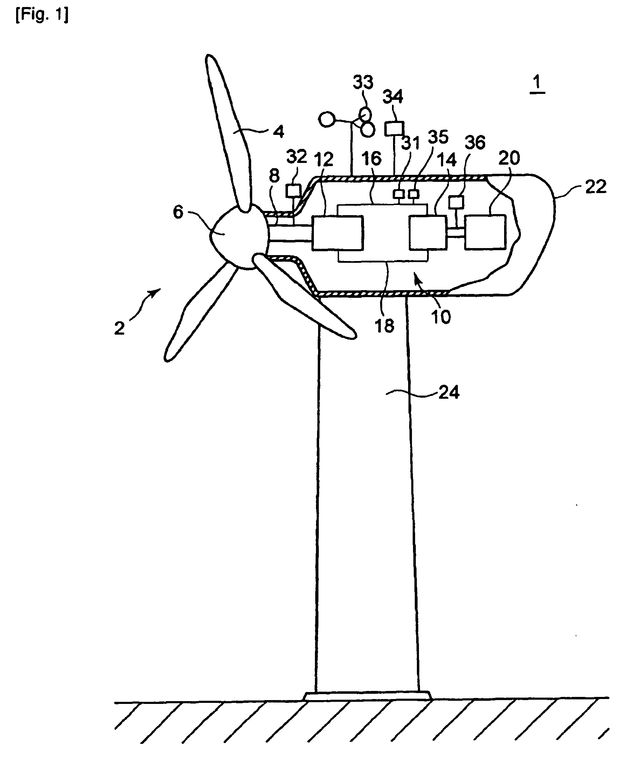

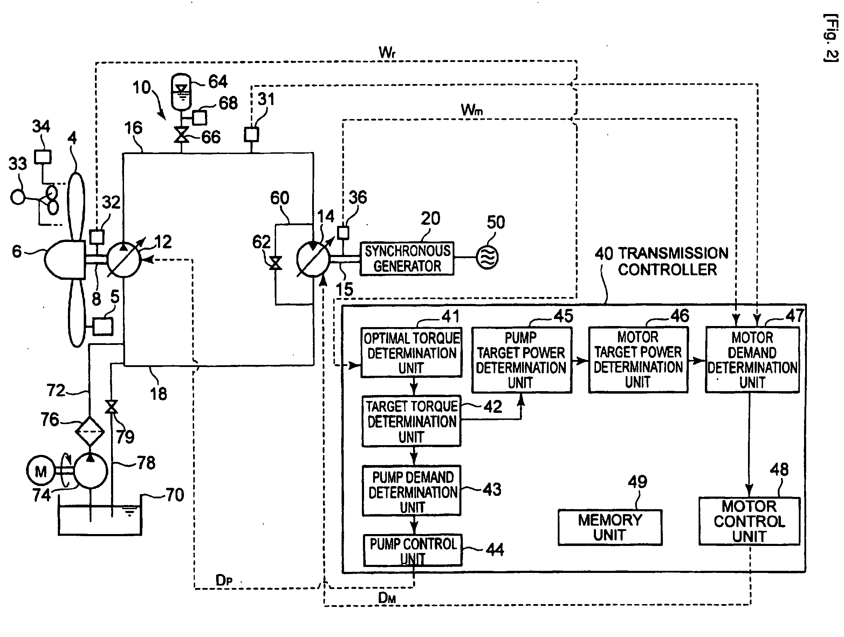

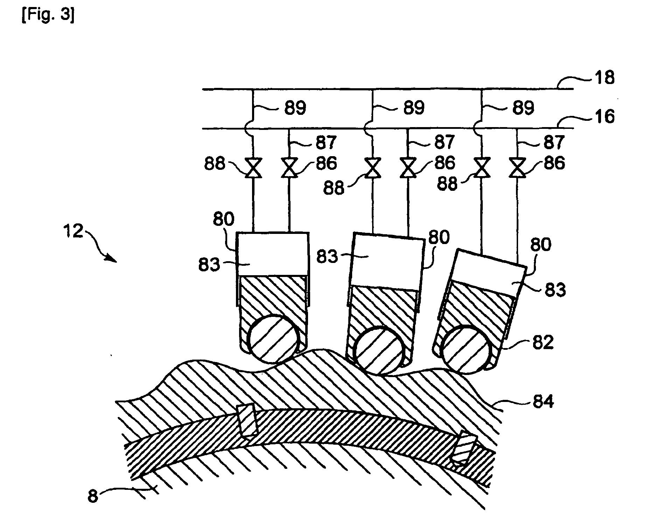

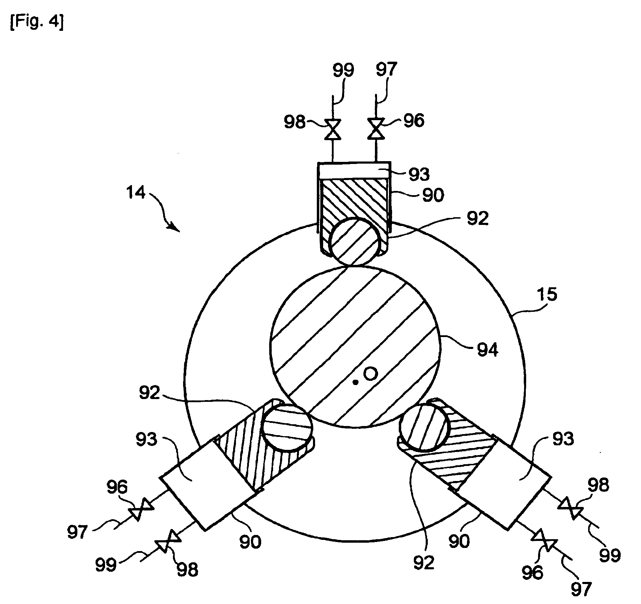

FIG.1 is a schematic view showing an example structure of a wind turbine generator. FIG.2 shows a structure of a hydraulic transmission and a transmission controller of the wind turbine generator. FIG.3 shows a specific example structure of a hydraulic pump. FIG.4 shows a specific example structure of a hydraulic motor.

As illustrated in FIG.1, the wind turbine generator 1 mainly includes a rotor 2 rotated by the wind, a hydraulic transmission 10 for increasing rotation speed of the rotor 2, a synchronous generator 20 connected to a grid, a transmission controller 40 for controlling the hydraulic transmission 10 (See FIG.2) and a variety of sensors including a pressure sensor 31 and rotation speed sensors 32 and 36.

The hydraulic transmission 10 and the synchronous generator 20 may be housed in a nacelle 22 or a tower 24 supporting the nacelle 22. FIG.1 shows an on-shore wind turbine generator having a tower 24 installed upright on the ground. However, this is not limitative and the wind turbine generator 1 may be installed in any place including offshore.

The rotor 2 is configured such that a rotating shaft 8 is connected to a hub 6 having blades 4. Specifically, three blades 4 extend radially from the hub 6 and each of the blades 4 is mounted on the hub 6 connected to the rotating shaft 8. This allows the power of the wind acting on the blades 4 to rotate the entire rotor 2, and the rotation of the rotor 2 is inputted to the hydraulic transmission 10 via the rotating shaft 8. An actuator (pitch driving mechanism) 5 for adjusting the pitch angle of the blade 4 is attached to the blade 4, as shown in FIG.2.

As illustrated in FIG.2, the hydraulic transmission 10 includes a variable-displacement hydraulic pump 12 which is driven by the rotating shaft 8, a variable-displacement hydraulic motor 14 whose output shaft 15 is connected to the synchronous generator 20, and a high pressure oil line 16 and a low pressure oil line 18 which are arranged between the hydraulic pump 12 and the hydraulic motor 14.

The high pressure oil line 16 connects an outlet of the hydraulic pump 12 to an inlet of the hydraulic motor 14. The low pressure oil line 18 connects an inlet of the hydraulic pump 12 to an outlet of the hydraulic motor 14. The operating oil (low pressure oil) discharged from the hydraulic pump 12 flows into the hydraulic motor 14 via the high pressure oil line 16. The operating oil having worked in the hydraulic motor 14 flows into the hydraulic pump 12 via the low pressure oil line 18 and then the pressure thereof is raised by the hydraulic pump 12 and finally the operating oil flows into the hydraulic motor 14 so as to drive the hydraulic motor 14.

FIG.2 illustrates an exemplary embodiment in which the hydraulic transmission 10 includes only one hydraulic motor 14. However, in some embodiments, it is also possible to provide a plurality of hydraulic motors 14 and connect each of the hydraulic motors 14 to the hydraulic pump 12.

As described below, in an embodiment, the hydraulic pump 12 and the hydraulic motor 14 may have specific structures shown in FIG.3 and FIG.4, respectively.

As shown in FIG.3, the hydraulic pump 12 may include a plurality of working chambers 83 each of which is formed by a cylinder 80 and a piston 82, a ring cam 84 having a cam profile which is in engagement with the piston 82 and a high pressure valve 86 and a low pressure valve 88 which are provided for each of the working chambers 83. The high pressure valve 86 is arranged in a high pressure communication path 87 between the high pressure oil line 16 and each of the working chambers 83. The low pressure valve 88 is arranged in a low pressure communication path 89 between the low pressure oil line 18 and each of the working chambers 83.

In an operation of the hydraulic pump 12, the ring cam 84 rotates with the rotating shaft 8 and the pistons 82 is cyclically moved upward and downward in accordance with the cam profile to repeat a pump cycle of the pistons 82 starting from the bottom dead center and reaching the top dead center and an intake cycle of the pistons starting from the top dead center and reaching the bottom dead center. Thus, each working chamber 83 has a volume defined by the piston 82 and an interior surface of the cylinder 80 that varies cyclically.

The hydraulic pump 12 can select the operation mode of each working chamber 83 from an active state and an idling state by opening and closing of the high pressure valve 86 and the low pressure valve 88. When the active state is selected for a working chamber 83, the high pressure valve 86 is closed and the low pressure valve 88 is opened during the intake cycle so that the operating oil flows into that working chamber 83, whereas the high pressure valve 86 is opened and the low pressure valve 88 is closed during the pump cycle so that the pressurized oil is displaced to the high pressure oil line 16 from that working chamber 83. In contrast to this, when the idling state is selected for a working chamber 83, the high pressure valve 86 is kept closed and the low pressure valve 88 is kept open during both the intake and pump cycles so that the operating oil flows back and forth between the working chamber 83 and the low pressure oil line 18, i.e. there is no displacement of the pressurized oil to the high pressure oil line 16. Accordingly, the net displacement of the hydraulic pump 12 can be adjusted by varying a ratio of the number of the working chambers 83 in the active state with respect to the total number of the working chambers 83. The control of the net displacement of the hydraulic pump 12 is performed by the transmission controller 40 described later in detail.

As illustrated in FIG.4, the hydraulic motor 14 may include a plurality of hydraulic chambers 93 formed between cylinders 90 and pistons 92, an eccentric cam 94 having a cam profile which engages with the pistons 92, and a high pressure valve 96 and a low pressure valve 98 that are provided for each of the hydraulic chambers 93. The high pressure valve 96 is arranged in a high pressure communication path 97 between the high pressure oil line 16 and each of the oil chambers 93, whereas the low pressure valve 98 is arranged in a low pressure communication path 99 between the low pressure oil line 18 and each of the oil chambers 93.

In an operation of the hydraulic motor 14, the pistons 92 are periodically moved upward and downward to repeat a motor cycle of the pistons 92 starting from the top dead center and reaching the bottom dead center and a discharge cycle of the pistons starting from the bottom dead center and reaching the top dead center. In the operation of the hydraulic motor 14, the volume of each working chamber 93 defined by the piston 92 and an interior surface of the cylinder 90 varies cyclically.

The hydraulic motor 14 can select the operation mode of each working chamber 93 from an active state and an idling state by opening and closing of the high pressure valve 96 and the low pressure valve 98. When the active state is selected for a working chamber 93, the high pressure valve 96 is opened and the low pressure valve 98 is closed during the motor cycle so that the operating oil flows into the working chamber 93 from the high pressure oil line 16, whereas the high pressure valve 96 is closed and the low pressure valve 98 is opened during the discharge cycle so that the pressurized oil is displaced to the low pressure oil line 18 from that working chamber 93. In contrast to this, when the idling state is selected for a working chamber 93, the high pressure valve 96 is kept closed and the low pressure valve 98 is kept open during both the motor and pump cycles so that the operating oil flows back and forth between the working chamber 93 and the low pressure oil line 18, i.e. there is no feeding of the pressurized oil form the high pressure oil line 16 to the working chamber 93. Like the hydraulic pump 12, the hydraulic motor 14 can adjust its net displacement by varying a ratio of the number of the working chambers 93 in the active state with respect to the total number of the working chambers 93. The control of the net displacement of the hydraulic motor 14 is performed by the transmission controller 40 described later in detail.

FIG.2 shows an accumulator 64 connected to the high pressure oil line 16. A solenoid valve 66 may be provided between the accumulator 64 and the high pressure oil line 16. By opening and closing of the solenoid valve 66, the accumulator 64 becomes in fluid communication with or disconnected from the high pressure oil line 16. For instance, when the operating oil is excessive in the high pressure oil line 16, the solenoid valve 66 may be opened to absorb the operating oil in the accumulator 64 and then closed to store the excessive operating oil in the accumulator 64. In this case, the operating oil stored in the accumulator 64 can be discharged to the high pressure oil line 16 by reopening the solenoid valve 66. Alternatively, the solenoid valve 66 may not be provided.

The pressure in the accumulator 64 can be measured using a pressure sensor 68.

A bypass line 60 is arranged between the high pressure oil line 16 and the low pressure oil line 18 to bypass the hydraulic motor 14 and a relief valve 62 is arranged in the bypass line 60 to maintain hydraulic pressure of the high pressure oil line 16 not more than a prescribed pressure. By this, the relief valve 62 automatically opens when the pressure in the high pressure oil line 16 reaches the prescribed pressure of the relief valve 62, to allow the high pressure oil to escape to the low pressure oil line 18 via the bypass line 60.

Further, the hydraulic transmission 10 has an oil tank 70, a supplementary line 72, a boost pump 74, an oil filter 76, a return line 78 and a low pressure relief valve 79.

The oil tank 70 stores supplementary operating oil. The supplementary line 72 connects the oil tank 70 to the low pressure oil line 18. The boost pump 74 is arranged in the supplementary line 72 so as to replenish the low pressure oil line 18 with the supplementary operating oil from the oil tank 70.

The return line 78 is installed between the oil tank 70 and the low pressure oil line 18. The low pressure relief valve 79 is arranged in the return line 78 and the pressure in the low pressure oil line 18 is maintained at the prescribed pressure or below. By this, even with the boost pump 74 supplying the supplementary operating oil to the low pressure oil line 18, the low pressure relief valve 79 can automatically open to release the operating oil to the oil tank 70 via the return line 78 once the pressure in the low pressure oil line 18 reaches the prescribed pressure of the low pressure relief valve 79.

As illustrated in FIG.2, the wind turbine generator 1 has a variety of sensors including a pressure sensor 31 and rotation speed sensors 32 and 34. The rotation speed sensors 32 and 34 measure the rotation speed of the rotating shaft 8 and the rotation speed of the output shaft 15 of the hydraulic motor 14, respectively. The pressure sensor 31 measures the pressure in the high pressure oil line 16. It is also possible to provide an anemometer 33 installed outside the nacelle 22 for measuring the wind speed and a temperature sensor 34 for measuring ambient temperature of the wind turbine generator 1. The measurement results of such sensors may be sent to the transmission controller 40 and used for controlling the hydraulic pump 12 and the hydraulic motor 14.

The synchronous generator 20 is coupled to the output shaft 15 of the hydraulic motor 14. The synchronous generator 20 is connected to the grid without a frequency converting circuit such as frequency converting circuits 530 and 550 of FIG.12B and FIG.12C. To do this, in the wind turbine generator 1, the transmission controller 40 controls the hydraulic transmission 10 to keep a rotational speed of the synchronous generator 20 at a synchronous speed based on frequency (e.g., 50 Hz or 60 Hz) of the grid 50. Specific control procedures of the transmission controller 40 are described later in detail.

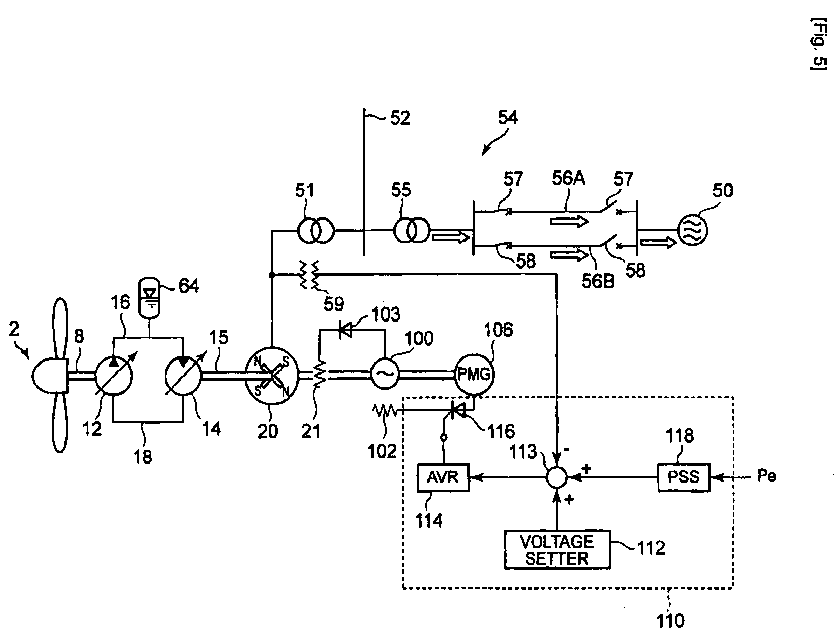

FIG.5 shows an example structure of the transmission line from the synchronous generator 20 to the grid 50. As shown in the drawing, the synchronous generator 20 is connected to a bus 52 via a booster transformer 51. The bus 52 is connected to the grid 50 via the transmission line 54. The transmission line 54 includes a transformer substation 55 and circuits 56A and 56B. Each of the circuits 56A and 56B is provided with a circuit breaker 57, 58. When there is no fault at the grid 50 and the transmission line 54, both of the circuit breakers 57 and 58 are closed and the power generated by the synchronous generator is transmitted through the transmission line 54 to the grid 50 in a direction of outlined arrows.

Further, the synchronous generator 20 includes a field winding 21 which rotates with the hydraulic motor 14 and the output shaft 15, and a stationary armature (not shown) to which the booster transformer 51 is connected. To the filed winding 21, DC field current is supplied from an exciter 100.

An exciter controller 110 is provided to control a magnitude of the field current supplied to the field winding 21. A terminal voltage detector 59 (a potential transformer) is provided to detect the terminal voltage of the synchronous generator 20. Based on the detected terminal voltage of the synchronous generator 20, the exciter controller 110 may control the exciter 100 so that the terminal voltage becomes a set value (a command value).

As a specific structure of the exciter 100, the exciter 100 may be an AC exciter as illustrated in FIG.5. Specifically, the exciter 100 may be an AC generator formed by a rotating armature (not shown) and a field winding (a stator) 102.

In such case, the exciter 100 is an AC exciter directly connected to the output shaft 15 of the hydraulic motor 14 and AC outputted from the rotating armature of the exciter 100 is converted into DC by a rectifier (a rotary rectifier) 103 and then supplied to the field winding 21 of the synchronous generator 20 as the field current. The field winding 21, the armature of the exciter 100 and the rectifier 103 rotate with the output shaft 15 of the hydraulic motor 14. In this manner, AC from the rotating armature of the AC exciter 100 is rectified by the rectifier (the rotary rectifier) 103 and supplied to the field winding 21 which is a rotator. By this, it is no longer necessary to provide a brush, thereby eliminating the need for brush maintenance (periodic replacement of the brush). As the wind turbine generators are often installed in a remote area such as in mountains and offshore, the fact that there is no need for the brush maintenance (the periodic replacement of the brush) significantly contributes to reducing a running cost.

In the example shown in FIG.5, the exciter controller 110 changes the magnitude of the field current supplied to the field winding 102 of the exciter so as to adjust the magnitude of the field current to the field winding 21 of the synchronous generator 20.

In such case, the exciter controller 110 may be formed by a voltage setter 112, a comparison circuit 113, an automatic voltage regulator (AVR) 114 and a thyristor 116, as shown in FIG.5. The voltage setter 112 outputs a set value of the terminal voltage to the comparison circuit 113. In the comparison circuit 113, the detected value of the terminal voltage of the synchronous generator 20 detected by the terminal voltage detector 59 is compared with the set value inputted from the voltage setter 112 and outputs the difference of the values to the AVR 114. In the AVR 114, based on the difference outputted from the comparison circuit 113, a gate signal is supplied to the thyristor 116. The thyristor 116 is provided between the field winding 102 of the exciter 100 and an auxiliary exciter formed by a permanent magnetic generator (PMG) 106 directly connected to the output shaft 15 of the hydraulic motor 14. The thyristor 116 uses the PMG (the auxiliary exciter) as power source and excites the field winding (stator field) 102 of the exciter 100.

In this manner, the PMG 106 which is directly connected to the output shaft 15 of the hydraulic motor 14 and attached to a common shaft of the synchronous generator 20, is used as power source of the thyristor 116 so as to excite the synchronous generator without an external power source even before connecting to the power grid 50. This is extremely advantageous for the wind turbine generator, which normally has a difficulty in obtaining power from the external power source.

From a perspective of improving the steady-state stability of the synchronous generator 20, the exciter controller 110 may be provided with a power system stabilizer (PSS) as shown in FIG.5. The PSS 118 may correct the comparison result of the comparison circuit 113 based on the active power Pₑ generated in the synchronous generator 20. Further, the PSS 118 mainly functions to suppress the generator swing in a fault event response mode which is described later. Furthermore, the active power Pₑ can be calculated from the detected values of the current and the voltage outputted from the stationary armature of the synchronous generator 20.

### (OPERATION CONTROL OF WIND TURBING GENERAOTR IN NORMAL OPERATION MODE)

In the normal operation when there is no fault event such as short-circuit, disconnection or grounding (the transmission wire touching the ground) at the grid 50 or the transmission line 54, the wind turbine generator 1 of the above structure controls the hydraulic transmission 10 in a normal operation mode described below.

As shown in FIG.2, the transmission controller 40 includes an optimal torque determination unit 41, a target torque determination unit 42, a pump demand determination unit 43, a pump control unit 44, a pump target power determination unit 45, a motor target power determination unit 46, a motor demand determination unit 47, a motor control unit 48 and a memory unit 49.

In the normal operation mode, the transmission controller 40 controls the hydraulic transmission 10 such that the rotating shaft 8 rotates at a rotational speed that is variable with respect to the wind speed while keeping a rotational speed of the synchronous generator 20 at a synchronous speed based on frequency of the grid 50. By this, the synchronous generator 20 can be coupled to the grid 50 without an intervening frequency-conversion circuit and the power generation efficiency of the wind turbine generator 1 can be enhanced by rotating the rotor 2 at the rotation speed in accordance with the wind speed.

Hereinafter, operations of each unit of the transmission controller 40 in the normal operation mode are explained. The functions of the transmission controller 40 are broadly divided into controlling of the hydraulic pump 12 and controlling of the hydraulic motor 14. The controlling of the hydraulic pump 12 to adjust displacement thereof is described first and next, the controlling of the hydraulic motor 14 to adjust displacement thereof is described.

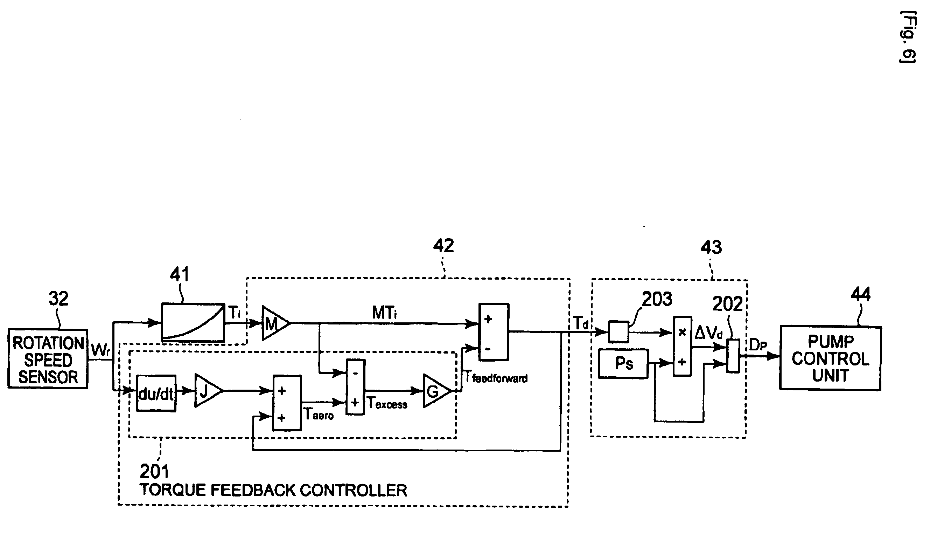

FIG.6 shows a signal flow of determining the displacement of the hydraulic pump 12 by the transmission controller 40. As shown in the drawing, the optimal torque determination unit 41 receives the rotation speed Wᵣ of the rotating shaft 8 detected by the rotation speed sensor 32 and determines an optimal torque Tᵢ of the hydraulic pump 12 from the rotation speed Wᵣ. For instance, the optimal torque determination unit 41 reads out from the memory unit 49 (see FIG.2), Wr-Ti function (a function of the rotation speed Wr and the optimal torque Ti) which is set in advance and obtains the optimal torque Ti which corresponds to the rotation speed Wr from the Wr-Ti function.

An example of the Wr-Ti function stored in the memory unit 49 is now explained.

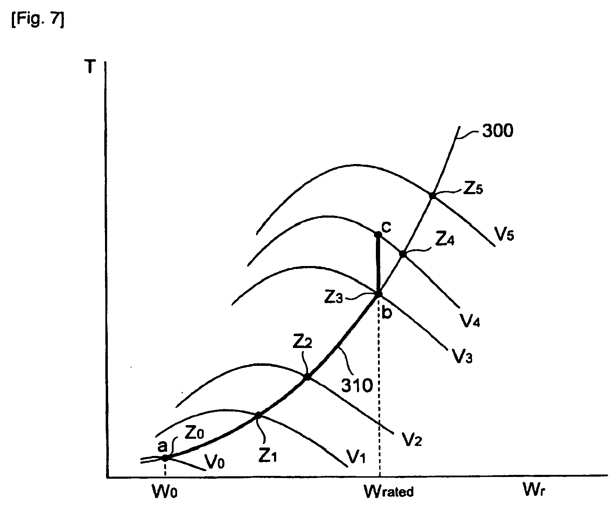

FIG.7 is a graph showing a maximum Cp curve with the rotation speed Wr of the rotor on the horizontal axis and the rotor torque T on the vertical axis. The maximum Cp curve 300 is a curve drawn by connecting coordinates (Wr, T) at which the power coefficient Cp becomes maximum. The maximum Cp curve 300 is drawn through the coordinates Z₁ to Z₅ at which the power function Cp becomes maximum with respect to a variety of wind speed (e.g. the wind speed V₀ to V₅).
The Wr-Ti function stored in the memory unit 49 may be a function 310 which is defined by the maximum Cp curve 300 between an operating point a and an operating point b and defined by a straight line between the operating point b and an operating point c as indicated by a heavy line in FIG.7. The function 310 is a straight line at which the rotation speed of the rotor is constant at a rated rotation speed W_{rated}. The wind speed V0 which corresponds to the operating point a is a cut-in wind speed and the wind speed V4 which corresponds to the operating point c is a wind speed at which a rated power is reached (a rated wind speed). To determine the optimal torque Ti from the function 310, a rotor torque which corresponds to the rotation speed Wᵣ of the rotating shaft 8 detected by the rotation speed sensor 32 is obtained from the function 310.
By using the function 310, in a wind speed area between the cut-in wind speed V0 and the wind speed V3, the rotations peed Wr of the hydraulic pump 12 (the rotor rotation speed) can be adjusted in accordance with the wind speed in the area between the initial rotation speed W₀ and the rated rotation speed W_{rated}, the wind turbine generator can operated in a condition where the power coefficient Cp is maximum. Specifically, in the variable speed range between the initial rotation speed W₀ and the rated rotation speed W_{rated}, the wind turbine generator can operate at maximum efficiency. Further, in the wind speed area between the wind speed V3 and the rated wind speed V4, the rotation speed Wr of the hydraulic pump 12 is kept at the rated rotation speed W_{rated}. In a high wind speed area between the rated wind speed V4 and the cut-out wind speed, the pitch angle of the blade 4 is regulated by an actuator (a pitch driving mechanism) to maintain the rated power.

The obtained optimal torque Tᵢ of the hydraulic pump 12 is then modified by the torque target determination unit 42 to determine the torque target T_{d} of the hydraulic pump 12.

The target torque determination unit 42 adjusts the optimal torque Tᵢ by multiplying by a scale factor M to give an adjusted optimal torque MTᵢ. The scale factor M can be any number between zero and one, and would typically be between 0.9 and 1. The multiplication of the scale factor M causes a slight reduction of the actual torque of the hydraulic pump 12 compared to the optimal torque Tᵢ, thus allowing the rotor 2 to accelerate more rapidly during gusts. Accordingly, it is possible to capture more power than if the pump torque were not scaled from the optimal torque Tᵢ. The scale factor M will cause the rotor 2 to decelerate more slowly, thus operating off its optimum operating point during lulls, however the additional power available due to tracking gusts is more significant than power loss due to sub-optimal operation during lulls.

The torque target T_{d} obtained by the target torque determination unit 42 may be the difference between the adjusted optimal torque MTᵢ and the output power of a torque feedback controller 201. The torque feedback controller 201 calculates an estimated aerodynamic torque, Tₐₑᵣₒ, which is the sum of the current torque target and an acceleration torque which is derived from the angular acceleration aᵣ of the rotor 2 multiplied by the moment of rotational inertia of the rotor 2, J. The output of the torque feedback controller 201 is the difference T_{excess} between the estimated aerodynamic torque and the adjusted optimal torque, which is then multiplied by a feedback gain, G to obtain a feedback torque T_{feedback}. The feedback gain G can be any number greater than or equal to zero, with a value of zero acting to disable the torque feedback controller 201.

The torque feedback controller 201 will respond to the acceleration and deceleration of the rotor 2 by subtracting torque from the adjusted optimal torque MTᵢ to slightly reduce the torque target T_{d} in the case of acceleration, and adding torque to the adjusted optimal torque to slightly increase the torque target T_{d} in the case of deceleration. This enables the rotor 2 to accelerate and decelerate faster in response to changes in input wind energy than adjusted optimal torque control alone, hence allowing for greater total energy capture from wind.

The torque target T_{d} obtained by the torque target determination unit 42 is sent to the pump demand determination unit 43 and used for the calculation of the demand D_{P} of the displacement of the hydraulic pump 12. The pump demand determination unit 43 calculates the demand D_{P} of the displacement of the hydraulic pump 12 by dividing the target torque T_{d} by the measured oil pressure Pₛ in the high pressure oil line 16. The demand D_{P} may be modified by a pressure limiter 202, which could be a PID type controller, the output of which is the demand D_{P} of the displacement. The pressure limiter 202 acts to keep the pressure of the hydraulic pump 12 within the acceptable range, i.e. below a maximum level for safe operation of the wind turbine generator, by modifying the pump demanded rate of fluid quanta transfer. The pressure limit may be disabled in some operating modes where it is desirable to dissipate energy through the relief valve 62, for instance to prevent the wind turbine generator from operating above its rated speed during extreme gusts, or may be varied in use. The pump demand determination unit 43 may correct the demand D_{P} of the displacement of the hydraulic pump 12 based on the oil temperature in the high pressure oil line 16.

Further, the pump demand determination unit 43 may use an adjuster 203 to correct the torque target T_{d} of the hydraulic pump 12 in response to a power demand signal from an external command center such as a farm controller of the wind farm and dispatching center. By this, it is possible to produce power which meets the demand from the external command center.

The demand D_{P} of the displacement of the hydraulic pump 12 having been calculated in the above manner, is then sent to the pump control unit 44 and the displacement of the hydraulic pump 12 is adjusted to the demand D_{P} by the pump control unit 44. For instance, the pump control unit 44 controls opening and closing of the high pressure valve 86 and the low pressure valve 88 to change a ratio of the working chambers 83 in the active state to the total number of the working chambers, thereby adjusting the displacement of the hydraulic pump 12 to the demand D_{P} of the displacement.

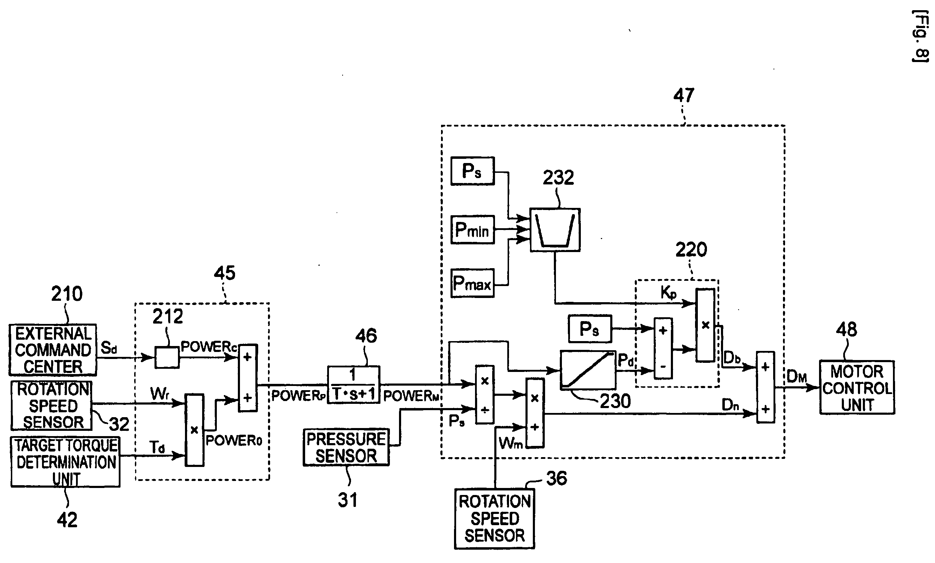

FIG.8 shows a signal flow of determining a displacement of the hydraulic motor 14 by the transmission controller 40.

As shown in the drawing, the pump target power determination unit 45 calculates a base value of the target output power of the hydraulic pump 12, POWER₀ by multiplying the target torque T_{d} of the hydraulic pump 12 obtained by the target torque determination unit 42 by the rotation speed Wr of the rotating shaft 8 obtained by the rotation speed sensor 32. In the pump target power determination unit 45, corrected output power POWER_{c} is calculated by an adjuster 212 in response to a power demand signal S_{d} from the external command center 210 such as a farm controller of the wind farm and dispatching center. Then, the corrected output power POWERc is added to the base value POWERc of the target output power which are obtained advance so as to calculate the target output power POWER_{P} of the hydraulic pump 12.

The motor target output determination unit 46 calculates the target output power POWER_{M} of the hydraulic motor 14 by processing the target output power POWER_{P} of the hydraulic pump 12 using a first order low pass filter, whose transfer function is H(s) = 1/(Ts+1).

Then, the motor demand determination unit 47 calculates the nominal demand Dₙ of the hydraulic motor 14 by dividing the target output power POWER_{M} of the hydraulic motor 14 by the measured oil pressure Pₛ measured by the oil pressure sensor 31 and the measured rotation speed Wₘ of the hydraulic motor 14 measured by the rotation speed sensor 36.

The nominal demand Dn of the hydraulic motor 14 calculated in the above manner, is obtained by dividing energy from the hydraulic pump 12 to the hydraulic motor 14 per unit time by the rotation speed Wm of the pressure Ps of the high pressure oil line 16 and the rotation speed Wm of the hydraulic motor 14. Thus, when the rotation speed Wm of the hydraulic motor 14 is too low, the nominal demand Dn is high, thereby raising the rotation speed Wm of the hydraulic motor 14. In contrast, when the rotation speed Wm of the hydraulic motor 14 is too high, the nominal demand Dn is small, thereby lowering the rotation speed Wm of the hydraulic motor 14. Therefore, it is possible to maintain the rotation speed Wm of the hydraulic motor 14 at a constant rate, i.e. at the synchronous speed of the synchronous generator 20).

In the motor demand determination unit 47, a corrected demand Db is calculated from the target output power POWER_{M} and then added to the nominal demand Dn to obtain a demand D_{M} of displacement of the hydraulic motor 14. The corrected demand Db may be, for instance, calculated by a pressure feedback controller 220 by multiplying the difference between the target pressure Pd of the high pressure oil line 16 and the measured oil pressure Pₛ measured by the pressure sensor 31 by a variable gain Kₚ.

The target pressure P_{d} of the high pressure oil line 16 may be calculated by inputting the current target output power POWER_{M} of the hydraulic motor to a function 230 indicating a relationship between a target motor output power set in advance and the target pressure of the high pressure oil line 16. The function 230 is at least partially defined by a curve in which the target pressure of the high pressure oil line 16 monotonically increases in accordance with increase of the motor target output power. Thus, the target pressure Pd of the high pressure line is set lower in the case where the target motor output power is small (i.e. the discharge rate of the hydraulic pump is low) than the case where the target output power of the hydraulic motor is high (i.e. the discharge rate of the hydraulic pump 12 is high). By this, it is possible to reduce the amount of internal leakage of the operation oil with respect to the discharge rate of the hydraulic pump 12 when the target motor output power is small, thereby suppressing the internal leakage of the operation oil affecting the control of the hydraulic transmission 10.

The variable gain Kₚ is determined using the function 232 in accordance with the current pressure of the high pressure oil line 16, Pₛ (the pressure detected by the pressure sensor), the maximum pressure Pₘₐₓ and the minimum pressure Pₘᵢₙ of the high pressure oil line 16 in an allowable range. For instance, when the current pressure Pₛ is outside the allowable range (i.s. Pₛ<Pₘᵢₙ or Pₛ>Pₘₐₓ), the variable gain Kₚ is set at the maximum gain Kₘₐₓ, and when the current pressure Pₛ is within the allowable range (i.e. Pₘᵢₙ less than or equal Pₛ less than or equal Pₘₐₓ), the variable gain Kₚ may be increased toward the maximum gain Kₘₐₓ as the current pressure P, becomes closer to the minimum pressure Pₘᵢₙ or the maximum pressure Pₘₐₓ. By this, when the pressure P ₛ is deviating from the allowable range, or when the pressure Pₛ is no longer in the allowable range, by increasing the variable gain Kₚ (or setting the variable gain at the maximum gain Kₘₐₓ) by which the difference between the pressure Pₛ and the target pressure P_{d} is multiplied, the pressure Pₛ of the high pressure oil line is promptly adjusted to be within the allowable range and also closer to the target pressure P_{d}.

In the normal operation mode, the terminal voltage of the synchronous generator 20 is maintained by the exciter controller 100 controlling the exciter. For instance, as shown in FIG.5, in the comparison circuit 114, a difference between the measured terminal voltage of the synchronous generator 20 measured by the terminal voltage detector 59 and the set value inputted from the voltage setter 112 may be obtained and based on the obtained difference, the gate signal of the thyristor 116 is supplied from the AVR 114. By this, the magnitude of the field current supplied to the field winding 21 of the synchronous generator 20 is adjusted and thus, the terminal voltage of the synchronous generator 20 is maintained (at the set value inputted from the voltage setter 112).

The set value (command value) of the generator inputted from the voltage setter 112 is, for instance, a voltage which conforms to the grid 50.

As described above, the transmission controller 40 controls the hydraulic transmission 10 in the normal operation mode such that the rotating shaft 8 rotates at a rotational speed that is variable with respect to the wind speed while keeping the rotation speed of the synchronous generator 20 at the synchronous speed based on the frequency of the grid 50.

Specifically, the transmission controller 40 calculates the optimal torque Ti of the rotating shaft by means of the optimal torque determination unit 41, and then based on the optimal torque Ti, determines the target torque Td of the hydraulic pump 12 by means of the target torque determination unit 42. Further, the transmission controller 40 calculates the demand D_{P} of the displacement of the hydraulic pump 12 from the target torque Td by means of the pump demand determination unit 43, and then adjust the displacement of the hydraulic pump 12 to the demand D_{P} of the displacement by means of the pump control unit 44. In this manner, the rotor 2 rotates at the rotation speed in accordance to the wind speed (i.e. the variable speed operation), thereby improving the power generation efficiency.

Furthermore, the hydraulic transmission controller 40 calculates the target output power POWER_{M} of the hydraulic motor 14 by means of the motor target power determination unit 46 based on the target output power POWER_{P} of the hydraulic pump 12. The hydraulic transmission controller 40 calculates, by means of the motor demand determination unit 47, the demand D_{M} of the displacement of the hydraulic motor 14 such that the synchronous generator 20 rotates at the synchronous speed which corresponds to the frequency of the grid 50 and then, by means of the motor control unit 48, adjust the displacement of the hydraulic motor 14 to the demand D_{M}. of the displacement By this, the synchronous generator 20 is maintained at the synchronous rotation speed and the synchronous generator can be connected to the grid 50 without a intervening frequency circuit.

### (OPERATION CONTROL OF WIND TURBINE IN FAULT EVENT RESPONSE MODE)

When there is a fault event such as such as short-circuit, disconnection or grounding (the transmission wire touching the ground) at the grid 50 or the transmission line 54, the power that can be sent to the grid 50 side is limited, instantly lowering an electrical output power (active power) of the synchronous generator 20. As a result, a mechanical input from the hydraulic motor 14 becomes excessive with respect to the electrical output power of the synchronous generator, causing the internal phase angle of the synchronous generator 20 to decrease abruptly. This may result in step-out of the synchronous generator 20.

The above phenomenon occurs in a short period of time (e.g. a few milliseconds to tends of seconds) immediately after the occurrence of the fault event. Thus, unlike the conventional wind turbine generator equipped with the frequency converting circuit 530, 550 functioning as a buffer (see FIG.12B and FIG.12C), it is necessary to respond immediately after the occurrence of the fault event in the wind turbine generator 1 of the present embodiment as the fault even can affect the synchronous generator 20 directly.

It is difficult to respond to the fault even sufficiently by the normal operation mode described above, in which control parameters are determined from an upstream side to a downstream side in the energy transmission path (the rotor 2 > the hydraulic pump 12 > the hydraulic motor 14 > the synchronous generator 20). In the normal operation mode, the displacement of the hydraulic motor 14 is reduced with the synchronous generator 20 in response to increase of the current rotation speed of the hydraulic motor 14 as well as the synchronous generator 20. However, this is not enough to effectively prevent the step-out of the synchronous generator 20.

In the present embodiment, when the fault even occurs at the grid 50 and the transmission line 54, the wind turbine generator 1 operates in a fault event response mode which is different from the above normal operation mode.

In the fault event response mode, different from the normal operation in which the control parameters are calculated upstream to downstream in the energy transmission path, the control parameters are calculated downstream to upstream in the energy transmission path. Specifically, in the fault even response mode, the field current to be supplied to the field winding of the synchronous generator 20 is controlled immediately after the occurrence of the fault event and also the demand D_{M} of the displacement of the hydraulic motor 14 is adjusted immediately such in response to the change in the electrical output power (electricity) of the synchronous generator 20 and, if necessary, the pitch and the hydraulic pump 12 are controlled as well.

In response to a sudden drop of the terminal voltage of the synchronous generator 20 and the electricity from the synchronous generator 20, a Low Voltage Detect signal is outputted. The operation of the wind turbine generator 1 may be switched from the normal operation mode to the fault event response mode in response to the Low Voltage Detect signal.

A specific example of the control by the exciter controller 110 and the transmission controller 40 when the short-circuit (disconnection and grounding) occurs between the circuit breakers 58 and 58 of the circuit 56B is explained below.

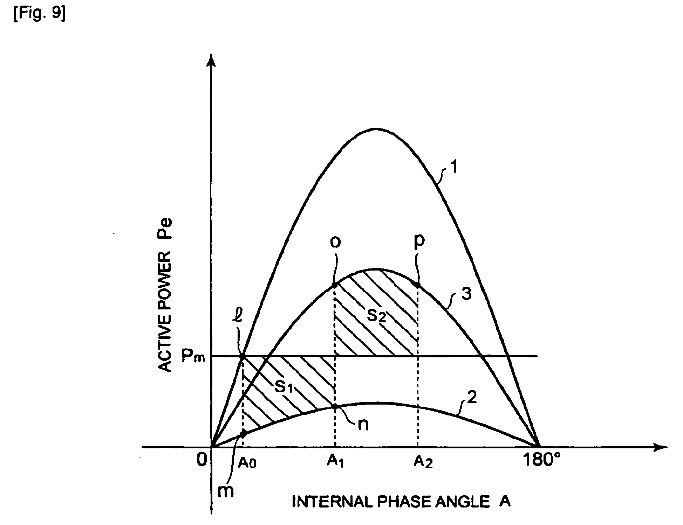

FIG.9 is a graph showing a relationship of an active power Pₑ and the internal phase angle A before and after the occurrence of short-circuit fault.

When the short-circuit occurs between the circuit breakers 58 and 58 of the circuit 56B, almost at the same time with the occurrence of the short-circuit fault, the terminal voltage of the synchronous generator 20 drops abruptly and the active power Pₑ outputted from the synchronous generator 20 drops suddenly as well (See FIG.9, state 1 to state 2). Then, the circuit breakers 58 and 58 are opened and the circuit 56B is shut off to eliminate the short-circuit fault in the circuit 56B. Thus, the electric power outputted from the synchronous generator 20 recovers (from state 2 to state 3). However, electric power is transmitted via the remaining circuit 56A only and thus, the electric power does not recover to the initial level (state 1) prior to the occurrence of the short-circuit fault.

Before the occurrence of the short-circuit fault, the synchronous generator 20 operates at a point l on a Pₑ-A curve of the state 1 and the internal phase angle A is A₀. The point 1 is an intersection of the mechanical input Pm from the hydraulic motor 14 (approximately the same as the target output power POWER_{M} of FIG.8) and the Pₑ-A curve of the state 1. If the internal phase angle A diverts slightly from the A₀, the synchronizing power dP/dA acts to correct the internal phase angle A to A₀. Therefore, the internal phase angle A remains stable at A0.

However, once the short-circuit fault occurs, the Pₑ-A curve shifts instantaneously from the state 1 to the state 2. Immediately after the occurrence of the short-circuit fault, the internal phase angle A remains at A0 by inertia of the rotator of the synchronous generator 20. Thus, upon the occurrence of the short-circuit fault, the operation point of the synchronous generator 20 shifts instantaneously from the operating point l to an operating point m. Meanwhile, the mechanical input Pm form the hydraulic motor 14 becomes excessive with respect to the electrical output power P ₑ of the synchronous generator 20, causing the rotator of the synchronous generator 20 to accelerate and the operating point of the synchronous generator 20 shifts from the operating point m to an operating point n. Thus, the internal phase angle A raises from A0 toward A1.

Once the internal phase angle A reaches A1, the circuit breakers 58 and 58 are opened to remove the short-circuit fault. By this, the Pₑ-A of the synchronous generator rises from the state 2 to the state 3. Meanwhile, shortly after removing the short-circuit fault, the internal phase angle A still remains at A1 due to the inertia of the rotator of the synchronous generator 20. Therefore, by removing the short-circuit fault, the operating point of the synchronous generator 20 instantaneously shifts from the operating point n to an operating point o. This causes the electrical output power Pₑ of the synchronous generator to exceed the mechanical input Pm from the hydraulic motor 14 and thus, the rotator of the synchronous generator 20 starts decelerating. Therefore, after the internal phase angle A reaches A2, the internal phase angle A decreases and thereafter the internal phase angle repeats gain and decline and oscillates. However, the damping force of the synchronous generator 20 eventually damps the internal phase angle and makes the internal phase angle stable. The operating point p which is a turning point of the internal phase angle A, is an operating point at which an acceleration energy shown as an area S1 formed between the input Pm from the hydraulic motor 14 and the Pₑ-A curve of the state 2, coincides with a deceleration energy shown as an area S2 formed between the Pₑ-A curve of the state 3 and output power Pₘ of the hydraulic motor.

In the embodiment, immediately after the occurrence of the fault event, the exciter controller 110 controls the exciter 100 to increase the field current supplied to the field winding 21 of the synchronous generator 20. This indicates upward shift of the Pₑ-A curve of the state 2 or the state 3 in FIG.9. As for the change in the internal phase angle A, the upward shit of the Pₑ-A curve reduces the acceleration energy (the area S1) and increases the deceleration energy (the area S2). Thus, it is possible to secure the deceleration energy (the area S2) which balances the acceleration energy (the area S1) at a early stage and turning point of the internal phase angle A, the operating point p is moved toward the initial operating point 1. Therefore, the first-wave swing (A2-A0) of the synchronous generator 20 after the fault event, can be suppressed, thereby improving a transient stability.

The control of the exciter 100 to improve the transient stability, may be preferably performed by a superquick excitation of thyristor type by means of the thyristor 116 and the AVR 114 as shown in FIG.5.

The technology to improve the transient stability of the synchronous generator by the superquick excitation control was established in power generating facilities using steam turbines and gas turbines. However, it was not known to apply that to the power generating apparatus of renewable energy type. This is because, in the conventional power generating apparatus of renewable energy type, the generator is connected to the grid via the frequency converting circuit which functions as a buffer and the transient stability of the generator was not much of an issue.

By magnetizing the synchronous generator 20 immediately after the decline of the terminal voltage of the generator due to the occurrence of the fault event, as described above, the first-wave swing of the synchronous generator 20 is suppressed, thereby improving the transient stability. However, the excellent responsiveness may lead to declining of the steady state stability after the first-wave swing.

In view of this, the exciter controller 110 controls the exciter 100 so that, when the internal phase angle A of the synchronous generator 20 increases, the field current of the field winding 21 rises, whereas when the internal phase angle A of the synchronous generator 20 decreases, the field current of the field winding 21 is reduced. In such case, it is possible to increase the exciter current when the internal phase angle A of the synchronous generator 20 increases, and to decrease the exciter current when the internal phase angle A of the synchronous generator 20 decreases, based on the electrical output power Pₑ of the synchronous generator 20 detected by a electrical power sensor 119 by means of the PSS 118 shown in FIG.5.

In power generating facilities using steam turbines, a governor control unit controls the turbine output to maintain a constant rotation speed of the generator. However, the governor control unit increases or reduces the flow of steam entering the steam turbine by opening and closing a steam regulating valve or an intercept valve in the steam turbine so as to adjust the turbine output. Thus, it takes at least a few seconds to start the operation. Therefore, in the power generating facilities using steam turbines and gas turbines, the fault even is handled solely by the superquick excitation control and the PSS.

In contrast, in the wind turbine generator 1 of the present embodiment, the output power of the hydraulic motor 14 can be controlled within few seconds from the occurrence of the fault event. Particularly, in the case of the hydraulic motor illustrated in FIG.4, suppose that the output shaft 15 rotates at a high speed (e.g. 155 or 1800 rpm) and a plurality of hydraulic chambers 93 are provided in a circumferential direction of the output shaft 15. It is possible to control the motor output power by adjusting the displacement within a few milliseconds to several tends of milliseconds.

In view of this, in the fault event response mode, the transmission controller 40 may regulate the output power of the hydraulic motor 14 by adjusting the displacement of the hydraulic motor to reduce the difference between the torque inputted from the hydraulic motor 14 to the synchronous generator 20 and the load torque of the synchronous generator 20. Specifically, by moving up and down the mechanical output power Pₘ of the hydraulic motor 14 to the synchronous generator 20 in FIG.9, it is possible to freely adjust the difference between the mechanical input Pm and the electrical input Pe (electricity) of the synchronous generator 20, thereby contributing to stabilizing the internal phase angle A. As a result, the generator swing of the synchronous generator 20 due to the fault event can be suppressed immediately.

Specifically, in the fault even response mode, the motor demand determination unit 47 calculates the demand D_{M} of the displacement of the hydraulic motor 14 based on the electric power generated by the synchronous generator 20 and the motor control unit 48 adjusts the displacement of the hydraulic motor 14 to the demand D_{M} of the displacement.

In this manner, by adjusting the displacement of the hydraulic motor 14 to the demand D_{M} of the displacement calculated based on the electric power generated by the synchronous generator 20, it is possible to change the displacement of the hydraulic motor 14 in response to the change of the electric power generated by the synchronous generator 20 after the occurrence of the fault event. Therefore, the torque of the hydraulic motor 14 can be adjusted in response to a drastic change of the load torque of the synchronous generator, thereby promptly suppressing the swing of the synchronous generator 20 due to the fault event.

When the fault event occurs, the terminal voltage of the synchronous generator is low in comparison to the normal operation and thus, the electric power that can be outputted from the synchronous generator 20 to the grid 50 is low in comparison to the normal operation. This causes the output power of the hydraulic motor 14 to decline and the output power of the hydraulic pump 12 to increase excessively, when the displacement of the hydraulic motor 14 is adjusted to the demand D_{M} of the displacement calculated based on the electricity of the synchronous generator.

Therefore, surplus of the high pressure oil discharged from the hydraulic pump 12 may be accumulated in the accumulator 64. Specifically, with the solenoid valve between the accumulator 64 and the high pressure oil line 16, immediately after the occurrence of the fault event, the solenoid valve 66 is opened to allow the accumulator 64 to communicate with the high pressure oil line 16 so as to accumulate the surplus of the high pressure oil in the accumulator 64. In contrast, in the case where the accumulator 64 is directly connected to the high pressure line 16 without the solenoid valve 66, immediately after the occurrence of the fault event, the surplus of the high pressure oil is accumulated in the accumulator 64 spontaneously and thus, a special process is not needed.

Once the accumulator 64 is filled with the high pressure oil, the pressure Ps of the high pressure oil line 16 increase to the set pressure of the relief valve 62 and thereafter, the relief valve 62 opens to release the surplus high pressure oil to the low-pressure oil line 18 via the bypass line 60.

Further, to balance the output power of the hydraulic pump 12 and the output power of the hydraulic motor 14 in the fault event response mode, the actuator 5 may change the pitch angle of the blade 4 toward a feathering position. By this, while preventing the hydraulic pump 12 from accelerating excessively (the rotation speed of the hydraulic pump 12 becomes excessively high), the output power of the hydraulic pump 12 can be restricted to some extent in response to the decline of the output power of the hydraulic motor 14.
Furthermore, when the output power of the hydraulic pump 12 and the output power of the hydraulic motor 14 are still not balanced after restricting the output power of the hydraulic pump 12, the surplus of the high pressure oil may be accumulated in the accumulator and the surplus of the high pressure oil may be released to the low pressure oil line 18 via the bypass line 60.

After recovering from the short-circuit fault of the circuit 2 by opening the circuit breaker 58, the actuator (the pitch driving mechanism) 5 may return the pitch angle of the blade 4 toward a fine position and the motor demand determination unit 47 may increase the demand D_{M} of the displacement of the hydraulic motor 14 to increase the electric power generated by the synchronous generator 20.

By this, after recovering from the fault event, it is possible to enhance power generation by increasing the displacement of the hydraulic motor 14.

As described above, in the fault event response mode, the field current to be supplied to the field winding 21 of the synchronous generator 20 immediately after the fault event is controlled and also the demand D_{M} of the displacement of the hydraulic motor 14 is adjusted in response to the change of the power generated in the synchronous generator 20 and further, if necessary, the pitch and the hydraulic pump 12 are controlled.

Specifically, immediately after the terminal voltage of the synchronous generator decreases due to the fault event, the exciter 110 controls the exciter 100 to increase the magnitude of the field current supplied to the field winding 21. By this, the synchronizing power of the synchronous generator 20 increases, suppressing the first-wave swing of the synchronous generator 20 after the occurrence of the fault event. As a result, the transient ability is improved.

Further, after increasing the field current supplied to the filed winding 21 by the exciter 100, the exciter controller 110 may control the exciter 100 such that the field current increases when the internal phase angle A of the synchronous generator 20 increases and such that the field current decreases when the internal phase angle A of the synchronous generator 20 decreases. By this, the steady-state stability is improved and it is now possible to promptly suppress the swing of the synchronous generator 20.

Further, in the fault event response mode, when the terminal voltage of the synchronous generator 20 decreases due to the fault event, the transmission controller 40 adjusts the displacement of the hydraulic motor 14 so as to reduce the difference between the torque inputted to the synchronous generator 20 from the hydraulic motor 14 and the load torque of the synchronous generator 20. For instance, the transmission controller 40, in the fault event response mode, may calculate the demand D_{M} of the displacement of the hydraulic motor 14 based on the power generated by the synchronous generator 20 by means of the motor demand determination unit 47, and adjust the displacement of the hydraulic motor 14 to the demand D_{M} of the displacement by means of the motor control unit 48.
By this, it is possible to adjust the torque of the hydraulic motor in response to the abrupt change of the generator torque and thus, the swing of the synchronous generator 20 due to the fault even can be promptly suppressed.

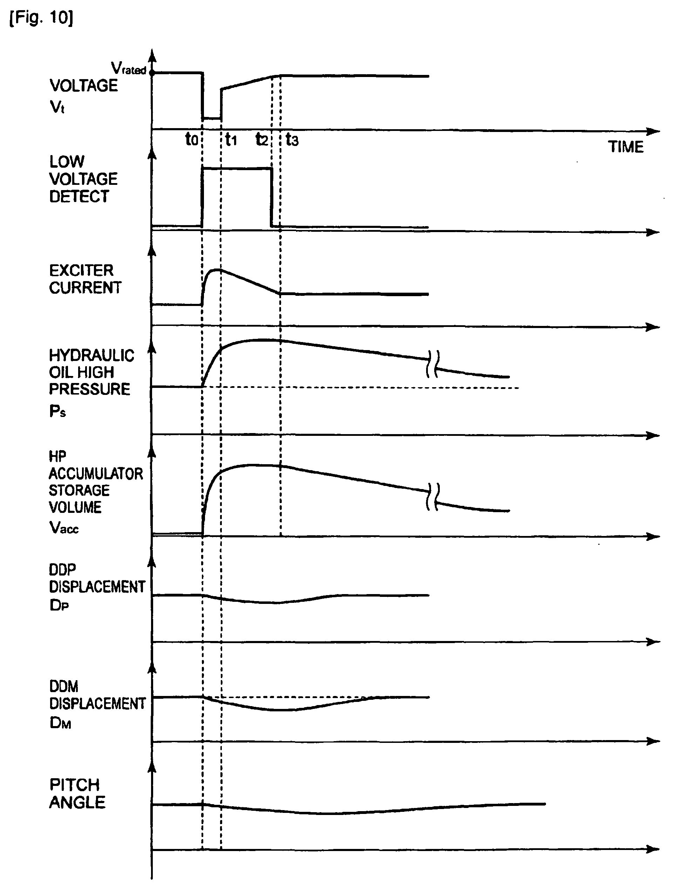

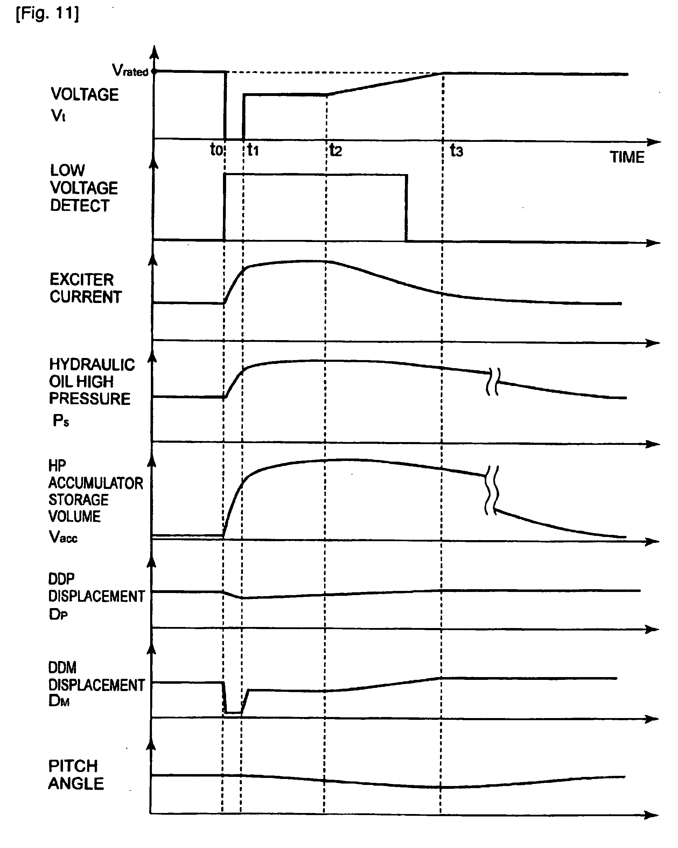

A few specific examples of using the control in the fault event response mode are described now. FIG.10 and FIG.11 are graphs showing change of each parameter over time when there is a fault event at the grid 50 or the transmission line 54.

In the example of FIG.10, before the occurrence of the fault event, the terminal voltage Vₜ of the synchronous generator 20 and a rated terminal voltage V_{rated} are steady. However, the fault event occurs at time t₀ and the terminal voltage Vₜ declines instantly. By this, a low voltage detect signal is outputted. The operation of the wind turbine generator 1 is switched from the normal operation mode to the fault event response mode in response to the Low Voltage Detect signal.

In this example, when the terininal voltage Vₜ is 90% or below of the rated terminal voltage, the Low Voltage Detect signal is outputted.

In response to a sudden drop of the terminal voltage Vₜ, a difference between the output value of the comparison circuit 113 and the measured value measured by the terminal voltage detector 59, i.e. the command value of the terminal voltage becomes abruptly high. Thus, the exciter 100 being controlled by the exciter controller 110 (specifically, AVR 114 and the thyristor 116) increases the field current (exciter current) to be supplied to the field winding 21 of the synchronous generator 20. By this, the sudden increase of the internal phase angle A of the synchronous generator 20 is suppressed and the transient stability of the synchronous generator 20 is enhanced, Further, although not shown in the drawing, after the exciter 100 increases the field current under the control of the AVR 114 and the thyristor 116, the field current is adjusted by the PS S 118 and the steady-state stability is enhanced.

After the occurrence of the fault event at T₀, the displacement D_{M} of the hydraulic motor 14 is adjusted to decrease based on the power Pₑ generated by the synchronous generator 20. However, the electrical power Pₑ of the synchronous generator 20 has already increased by increasing the field current supplied to the field winding 21 and thus, it is not necessary to significantly reduce the displacement D_{M} of the hydraulic motor 14. By this, the mechanical input power Pₘ from the hydraulic motor 14 declines, the difference between the mechanical input Pm and the electrical output power Pₑ (generated power) of the synchronous generator 20 becomes small and the increase of the internal phase due to the fault event is suppressed. As a result, the swing of the synchronous generator due to the fault event can be promptly suppressed. Further , when the fault event occurs at the time T₀, the actuator (the pitch driving mechanism) 5 begins pitch control of the blade 4 and the pitch angle transits toward the feathering position. However, the pitch control by the actuator 5 can change the pitch angle only at a speed of, for instance, approximately 3 deg/s to 6 deg/s. This tends to causes a delay in responding to the fault event, in comparison to other controls in the exciter controller 110 and the hydraulic motor 14. By changing the pitch angle of the blade 4 toward the feathering position, it is possible to limit the output power of the hydraulic pump 12 to some extent in accordance with the decrease output power of the hydraulic motor 14 while preventing the excessive acceleration of the hydraulic pump 12.
Further, even after restricting the output power of the hydraulic pump 12, the output power of the hydraulic pump still remains excessive with respect to the output power of the hydraulic motor 14. This causes the pressure Ps of the high pressure oil line 16 to rise and the surplus of the high pressure oil is accumulated in the accumulator 64, As a result, the amount of the high pressure oil accumulated in the accumulator 64 increases abruptly from the time to.

Next, at a time t1, the fault event is resolved and the terminal voltage Vₜ begins to recover and at a time t₂, the terminal voltage Vₜ reaches 90% of the rated terminal voltage V_{rated}. Finally, at a time t₃, the terminal voltage Vₜ reaches 94% of the rated terminal voltage V_{rated}. For instance, the time t₁ is 0.14 second past the time t₀ and the time t₃ is 0.5 second past the time t₀.

In response to the recovery of the terminal voltage Vₜ due to the recovery from the fault event, the output value of the comparison circuit 113, i.e. the difference between the command value of the terminal voltage and the measured terminal voltage detected by the terminal voltage detector 59 becomes small. Thus, the exciter 100, under the control of the exciter controller 110 (i.e. AVR 114 and the thyristor 116) reduces the field current (exciter current) to be supplied to the field winding 21 of the synchronous generator 20.

Further, when the fault even is resolved, the terminal voltage Vₜ reaches 90% of the rated terminal voltage V_{rated} (at t2), outputting of the low voltage detect signal stops and the operation of the wind turbine generator 1 is switched from the fault event response mode to the normal operation mode.

Thus, the displacement D_{M} of the hydraulic motor 14 begins increasing at the time t2 where the terminal voltage Vₜ reaches 90% of the rated terminal voltage after the recovery from the fault event. This allows for an increased amount of power generated by the wind turbine generator 1 after the recovery from the fault event. Further, past the time t2, the pitch angle of the blade 4 is gradually moved toward the fine position by the actuator (the pitch driving mechanism) 5. In response to this, the displacement D_{P} of the hydraulic pump increases gradually. Meanwhile, by changing the pitch angle of the blade 4 and the displacement D_{P} of the hydraulic pump 12 slower than the speed of increasing the displacement D_{M} of the hydraulic motor 14, the high pressure oil accumulated in the accumulator 4 is released and the pressure Ps of the high pressure line 16 decreases.

The example shown in FIG.11 is different from the example shown in FIG.10 in that the terminal voltage Vₜ abruptly drops to approximately zero. It is mainly explained how the difference affects the control in the fault event response model. A part of the control that is common to the example of FIG.10 is not further explained,

In the example of FIG.11, the time t1 is 0.15 second past the time t₀, the time t₂ is 0.7 second past the time t₀ and the time t₃ is 1.5 second past the time t₀.

As shown in FIG.11, before the occurrence of the fault event, the terminal voltage Vₜ is steady at the rated terminal voltage V_{rated} and once the fault event occurs at the time t ₀, the terminal voltage Vₜ abruptly declines to approximately zero. By this, the low voltage detect signal is outputted. The operation of the wind turbine generator 1 is switched from the normal operation mode to the fault event response mode.

In response to a sudden drop of the terminal voltage Vₜ, the output value of the comparison circuit 113, the command value of the terminal voltage, i.e, the difference between the output value of the comparison circuit 113 and the measured value measured by the terminal voltage detector 59 becomes abruptly big. Thus, the exciter 100 being controlled by the exciter controller 110 (specifically, AVR 114 and the thyristor 116) increases the field current (exciter current) to be supplied to the field winding 21 of the synchronous generator 20. Different from the example of FIG.1, the terminal voltage Vₜ drop to approximately zero at the time t₀ and the electrical output power Pₑ of the synchronous generator 20 becomes approximately zero. Thus, increasing the field current to be supplied to the field winding 21 does not have much effect in suppressing the swing of the synchronous generator 20.

After the occurrence of the fault event at t₀, the displacement D_{M} of the hydraulic motor 14 is adjusted based on the power Pₑ generated by the synchronous generator 20 and then decreases. Meanwhile, the electrical output power Pₑ of the synchronous generator 20 is approximately zero even after increasing the field current to be supplied to the field winding 21 and thus, the displacement D_{M} of the hydraulic motor 14 decreases to approximately zero in the attempt to balance the mechanical output power Pₘ from the hydraulic motor 14 and the electrical output power Pₑ of the synchronous generator 20. By this, the difference between the mechanical input power Pₘ and the electrical output power of the synchronous generator 20 (electricity) of the synchronous generator 20 is reduced, thereby preventing the internal phase angle A caused by the fault event from increasing. As a result, the generator swing of the synchronous generator 20 due to the fault event can be suppressed.

In the example of FIG.10, the terminal voltage Vₜ is not approximately zero between to and t₁. Thus it is possible to suppress the swing of the synchronous generator 20 by controlling the field current mainly by the exciter controller 110 (specifically AVR 114, the thyristor 116 and the PSS 118). Therefore, it is no necessary to reduce the displacement D_{M} of the hydraulic motor 14 to approximately zero.

In contrast, in the example of FIG.11, the terminal voltage Vₜ is approximately zero between t₀ and t₁. Thus, controlling of the field current by the exciter controller 110 (specifically AVR 114, the thyristor 116 and the PSS 118) does not have much effect in suppressing the swing of the synchronous generator. Therefore, the displacement D_{M} of the hydraulic motor 14 is sharply reduced by means of the exciter controller 110 (specifically AVR 114, the thyristor 116 and the PSS 118) to suppress the swing of the synchronous generator 20.

In this manner, depending on a type of the fault event, the swing of the synchronous generator may be controlled in different manners.

While the present invention is described below with reference to exemplary embodiments, it is obvious to those skilled in the art that various changes may be made without departing from the scope of the invention.

### REFERENCE NUMERALS

- 1: Wind turbine generator
- 2: Rotor
- 4: Blade
- 6: Hub
- 8: Rotating shaft
- 10: Hydraulic transmission
- 12: Hydraulic pump
- 14: Hydraulic motor1
- 15: output shaft
- 16: High pressure oil line
- 18: Low pressure oil line
- 20: Synchronous generator
- 21: Field winding
- 22: Nacelle
- 24: Tower
- 31: Pressure sensor
- 32: Rotation speed sensor
- 33: Anemometer
- 34: Temperature sensor
- 36: Rotation speed sensor
- 40: Transmission controller
- 41: Optimal torque determination unit
- 42: Target torque determination unit
- 43: Pump demand determination unit
- 44: Pump control unit
- 45: Pump target power determination unit
- 46: Motor target power determination unit
- 47: Motor demand determination unit
- 48: Motor control unit
- 49: Memory unit
- 50: Grid
- 51: Booster transformer
- 52: Bus
- 54: Transmission line
- 55: Transformer substation
- 56A: Circuit
- 56B: Circuit
- 57, 58: Circuit breaker
- 59: Terminal voltage detector
- 60: Bypass line
- 62: Relief valve
- 64: Accumulator
- 66: Solenoid valve
- 68: Pressure sensor
- 70: Oil tank
- 72: Supplementary line
- 74: Boost pump
- 76: Oil filter
- 78: Return line
- 79: Low-pressure relief valve
- 100: Exciter (AC exciter)
- 102: Field winding
- 103: Rotary rectifier
- 106: PMG
- 110: Exciter controller
- 112: Voltage setter
- 113: Comparison circuit
- 114: AVR
- 116: Thyristor
- 118: PSS
- 201: Torque feedback controller
- 202: Pressure limiter
- 203: Adjuster
- 210: External command center
- 212: Adjuster
- 220: Pressure feedback controller
- 300: Maximum Cp curve
- 310: Wr-Ti function
- 500: Step-up gear
- 510: Squirrel case induction generator
- 520: Secondary wound-rotor induction generator
- 530: AC-DC-AC converter (Frequency converting circuit)
- 540: Synchronous generator
- 550: AC-DC-AC link (Frequency converting circuit)

## Claims

1. A power generating apparatus of renewable energy type (1) which generates power using renewable energy, comprising:
a blade (4);
a rotating shaft (8) which is rotated by the renewable energy received via the blade (4);
a hydraulic transmission (10) which comprises a hydraulic pump (12) driven by the rotating shaft (8) and a hydraulic motor (14) driven by pressurized oil supplied from the hydraulic pump (12);
a synchronous generator (20) which is driven by the hydraulic motor (14) to generate power and coupled to a grid (50) without an intervening frequency-conversion circuit, the generated power being supplied to the grid (50);
a transmission controller (40) which controls the hydraulic transmission (10) in a normal operation mode to adjust displacement of each of the hydraulic pump (12) and the hydraulic motor (14) such that the rotating shaft (8) rotates at a rotational speed that is variable with respect to flow speed of the renewable energy while keeping a rotational speed of the synchronous generator (20) at a synchronous speed based on frequency of the grid (50) during normal operation of the power generating apparatus (1),
a high pressure oil line (16) connecting an outlet of the hydraulic pump (12) to an inlet of the hydraulic motor (14), and
an accumulator (64) connected to the high pressure oil line (16),
**characterized in that** said transmission controller (40) controls the hydraulic transmission (10) in a fault event response mode to adjust the displacement of the hydraulic motor (14) such that a difference between a load torque of the synchronous generator (20) and a torque input to the synchronous generator (20) by the hydraulic motor (14) decreases, and the displacement of the hydraulic pump (12) becomes excessive with respect to the displacement of the hydraulic motor (14), when a terminal voltage of the synchronous generator (20) decreases due to the fault event at a transmission line (54) from the grid (50) to the synchronous generator (20) or the grid (50),
and **in that** the displacement of the hydraulic pump (12) which is excessive with respect to the displacement of the hydraulic motor (14) is accumulated in the accumulator (64) when the fault event occurs at the grid (50) or the transmission line (54).

2. The power generating apparatus of renewable energy type (1) according to claim 1, wherein the transmission controller (40) comprises:
a target torque determination unit (42) which, in the normal operation mode, determines a target torque of the hydraulic pump (12) based on an optimal torque of the rotating shaft (8) in accordance with the flow speed of the renewable energy;
a pump demand determination unit (43) which, in the normal operation mode, determines a demand D_{P} of the displacement of the hydraulic pump (12) from the target torque of the hydraulic pump (12); and
a pump control unit (44) which adjusts the displacement of the hydraulic pump at the demand D_{P}.

3. The power generating apparatus of renewable energy type (1) according to claim 1 or 2, wherein the transmission controller (40) comprises:
a motor target power determination unit (46) which determines a target output power POWER_{M} of the hydraulic motor (14) based on a target output power POWER_{P} of the hydraulic pump (12);
a motor demand determination unit (47) which, in the normal operation mode, determines a demand D_{M} of the displacement of the hydraulic motor (14) based on the determined target output power POWER_{M} such that the synchronous generator (20) rotates at the synchronous speed; and
a motor control unit (48) which adjusts the displacement of the hydraulic motor (14) at the demand D_{M}.

4. The power generating apparatus of renewable energy type (1) according to any one of claims 1 to 3, further comprising:
a terminal voltage detector (59) which detects a terminal voltage of the synchronous generator (20);
an exciter (100) which supplies a field current to a field winding of the synchronous generator (20); and
an exciter controller (110) which controls the exciter (100) based on a difference between the terminal voltage detected by the terminal voltage detector (59) and a command value for the terminal voltage.

5. The power generating apparatus of renewable energy type (1) according to claim 4, wherein the exciter controller (110) controls the exciter (100) such that the field current is increased immediately after the terminal voltage of the synchronous generator (20) decreases due to a fault event at the grid (50) or a transmission line from the synchronous generator (20) to the grid (50).

6. The power generating apparatus of renewable energy type (1) according to claim 5, wherein after increasing the field current by the exciter (100), the exciter controller (110) controls the exciter (100) such that the field current is increased when an internal phase angle of the synchronous generator (20) increases and is decreased when the internal phase angle of the synchronous generator (20) decreases.

7. The power generating apparatus of renewable energy type (1) according to claim 1, wherein said accumulator (64) is connected to said high pressure oil line (16) via a solenoid valve (66), and said solenoid valve (66) is controlled to be opened and closed so as to be able to allow the accumulator (66) to communicate with the high pressure oil line (16) immediately after the occurrence of the fault event at the grid (50) or the transmission line (54).

8. The power generating apparatus of renewable energy type (1) according to claim 1, wherein the transmission controller (40) comprises:
a motor demand determination unit (47) which, in the fault event response mode, determines a demand D_{M} of the displacement of the hydraulic motor (14) based on the power generated by the synchronous generator (20); and
a motor control unit (48) which adjusts the displacement of the hydraulic motor (14) at the demand D_{M}.

9. The power generating apparatus of renewable energy type (1) according to claim 8, further comprising:
a pitch driving mechanism which adjusts a pitch angle of the blade (4),
wherein the pitch driving mechanism changes the pitch angle of the blade (4) toward a feathering position during the fault event at the grid (50) or the transmission line (54).

10. The power generating apparatus of renewable energy type (1) according to claim 9, wherein after recovery from the fault event starts, the pitch driving mechanism changes the pitch angle of the blade (4) toward a fine position and the motor demand determination unit (47) increases the demand D_{M} of the displacement of the hydraulic motor (14) to increase the power generated by the synchronous generator (20).

11. The power generating apparatus of renewable energy type (1) according to claim 5, wherein the fault event is a condition where a voltage of the grid (50) drops to a voltage specified in grid code or lower.

12. The power generating apparatus of renewable energy type (1) according to claim 4,
wherein the exciter controller (110) includes a thyristor (116) which excites a stator field of the exciter (100),
wherein the exciter (100) is an AC exciter which comprises the stator field excited by the thyristor (116) and a rotor armature rotating with the shaft (15) of the synchronous generator (20), the DC field current being supplied from the rotor armature to the field winding of the synchronous generator (20) via a rotary rectifier (103).

13. The power generating apparatus of renewable energy type (1) according to claim 12, further comprising:
an auxiliary exciter which includes a permanent magnetic generator attached to a common shaft with the synchronous generator (20),
wherein the thyristor (116) of the exciter controller (110) uses the auxiliary exciter as power source and excite the stator field of the exciter (100).

14. The power generating apparatus of renewable energy type (1) according to claim 1, wherein the power generating apparatus is a wind turbine generator which generates the power from wind as the renewable energy.

15. An operation method of a power generating apparatus of renewable energy type (1) which is **characterized in that** it comprises: a rotating shaft (8) rotated by renewable energy received via a blade (4); a hydraulic transmission (10) which comprises a hydraulic pump (12) driven by the rotating shaft (8) and a hydraulic motor (14) driven by pressurized oil supplied from the hydraulic pump (12); and a synchronous generator (20) which is driven by the hydraulic motor (14) to generate power and coupled to a grid (50) without an intervening frequency-conversion circuit, the generated power being supplied to the grid (50), the operation method comprising the step of:
controlling the hydraulic transmission (10) in a normal operation mode to adjust displacement of each of the hydraulic pump (12) and the hydraulic motor (14) such that the rotating shaft (8) rotates at a rotational speed that is variable with respect to flow speed of the renewable energy while keeping a rotational speed of the synchronous generator (20) at a synchronous speed based on frequency of the grid (50) during normal operation of the power generating apparatus (1);
the method being **characterized in that** it further comprises the steps of:
controlling the hydraulic transmission (10) in a fault event response mode to adjust the displacement of the hydraulic motor (14) such that a difference between a load torque of the synchronous generator (20) and a torque inputted to the synchronous generator (20) by the hydraulic motor (14) decreases, and the displacement of the hydraulic pump (12) becomes excessive with respect to the displacement of the hydraulic motor (14), when a terminal voltage of the synchronous generator (20) decreases due to the fault event at a transmission line (54) from the synchronous generator (20) to the grid (50) or the grid, and
accumulating the displacement of the hydraulic pump (12) excessive with respect to the displacement of the hydraulic motor (14) in the accumulator (16) connected to the high pressure oil line (16) between an outlet of the hydraulic pump (12) to an inlet of the hydraulic motor (14) when the fault event occurs at the grid (50) or the transmission line (54).

16. The operation method of a power generating apparatus of renewable energy type (1) according to claim 15, further comprising the step of:
increasing a field current to be supplied to a field winding of the synchronous generator (20) immediately after a terminal voltage of the synchronous generator (20) decreases due to a fault event at the grid (50) or a transmission line (54) from the synchronous generator (20) to the grid (50).

17. The operation method of a power generating apparatus of renewable energy type (1) according to claim 15 or 16,
wherein said accumulator (64) is connected to said high pressure oil line (16) via a solenoid valve (66), and
wherein, in the step of accumulating the excessive displacement of the hydraulic pump (12) in the accumulator (64), the solenoid valve (66) is opened immediately after the occurrence of the fault event at the grid (50) or the transmission line (54) so as to allow the accumulator (64) to communicate with the high pressure oil line (16).

## Patentansprüche

1. Energieerzeugungsvorrichtung (1) vom Typ für erneuerbare Energien, die Energie unter Verwendung erneuerbarer Energie generiert, umfassend:
ein Blatt (4),
eine Drehwelle (8), die von der über das Blatt (4) empfangene erneuerbare Energie gedreht wird,
eine hydraulische Kraftübertragung (10), die eine von der Drehwelle (8) angetriebene Hydraulikpumpe (12) und einen Hydraulikmotor (14) umfasst, der durch von der Hydraulikpumpe (12) zugeführtes druckbeaufschlagtes Öl angetrieben wird,
einen Synchrongenerator (20), der von dem Hydraulikmotor (14) angetrieben wird, um Energie zu erzeugen, und der ohne einen zwischengeschalteten Frequenzwandlerkreis mit einem Energienetz (50) gekoppelt ist, wobei die erzeugte Energie in das Energienetz (50) eingespeist wird,
eine Kraftübertragungssteuereinheit (40), die die hydraulische Kraftübertragung (10) in einem normalen Betriebsmodus veranlasst, eine Förderleistung sowohl der Hydraulikpumpe (12) als auch des Hydraulikmotors (14) so einzustellen, dass sich die Drehwelle (8) mit einer Drehzahl dreht, die in Bezug auf die Fließgeschwindigkeit der erneuerbaren Energie variabel ist, während eine Drehzahl des Synchrongenerators (20) auf der Basis der Frequenz des Energienetzes (50) während des Normalbetriebes der Energieerzeugungsvorrichtung (1) auf einer Synchrongeschwindigkeit gehalten wird,
eine Hochdruckölleitung (16), die einen Auslass der Hydraulikpumpe (12) mit einem Einlass der Hydraulikmotor (14) verbindet, und
einen Akkumulator (64), der mit der Hochdruckölleitung (16) verbunden ist,
**dadurch gekennzeichnet, dass** die Kraftübertragungssteuereinheit (40) die hydraulische Kraftübertragung (10) in einem Störfallreaktionsmodus veranlasst, die Förderleistung des Hydraulikmotors (14) so einzustellen, dass eine Differenz zwischen einem Lastdrehmoment des Synchrongenerators (20) und einem Drehmoment, das durch den Hydraulikmotor (14) in den Synchrongenerator (20) eingespeist wird, abnimmt, und die Förderleistung der Hydraulikpumpe (12) in Bezug auf die Förderleistung des Hydraulikmotors (14) überhöht wird, wenn eine Klemmenspannung des Synchrongenerators (20) aufgrund des Störfalls in einer Übertragungsleitung (54) von dem Energienetz (50) zu dem Synchrongenerator (20) oder dem Energienetz (50) abnimmt,
und dass die Förderleistung der Hydraulikpumpe (12), die in Bezug auf die Förderleistung des Hydraulikmotors (14) überhöht ist, in dem Akkumulator (64) akkumuliert wird, wenn der Störfall in dem Energienetz (50) oder der Übertragungsleitung (54) eintritt.

2. Energieerzeugungsvorrichtung (1) vom Typ für erneuerbare Energien nach Anspruch 1, wobei die Kraftübertragungssteuereinheit (40) umfasst:
eine Solldrehmomentbestimmungseinheit (42), die, im normalen Betriebsmodus, ein Solldrehmoment der Hydraulikpumpe (12) auf der Basis eines optimalen Drehmoments der Drehwelle (8) gemäß der Fließgeschwindigkeit der erneuerbaren Energie bestimmt,
eine Pumpenbedarfsbestimmungseinheit (43), die, im normalen Betriebsmodus, einen Bedarf D_{P} der Förderleistung der Hydraulikpumpe (12) anhand des Solldrehmoments der Hydraulikpumpe (12) bestimmt, und
eine Pumpensteuereinheit (44), die die Förderleistung der Hydraulikpumpe auf den Bedarf D_{P} einstellt.

3. Energieerzeugungsvorrichtung (1) vom Typ für erneuerbare Energien nach Anspruch 1 oder 2, wobei die Kraftübertragungssteuereinheit (40) umfasst:
eine Motor-Sollleistungsbestimmungseinheit (46), die eine Soll-Ausgangsleistung POWER_{M} des Hydraulikmotors (14) auf der Basis einer Soll-Ausgangsleistung POWER_{P} der Hydraulikpumpe (12) bestimmt,
eine Motor-Bedarfsbestimmungseinheit (47), die, im normalen Betriebsmodus, einen Bedarf D_{M} der Förderleistung des Hydraulikmotors (14) auf der Basis der bestimmten Soll-Ausgangsleistung POWER_{M} so bestimmt, dass sich der Synchrongenerator (20) mit der Synchrongeschwindigkeit dreht, und
eine Motorsteuereinheit (48), die die Förderleistung des Hydraulikmotors (14) auf den Bedarf D_{M} justiert.

4. Energieerzeugungsvorrichtung (1) vom Typ für erneuerbare Energien nach einem der Ansprüche 1 bis 3, ferner umfassend:
eine Klemmenspannungsdetektor (59), der eine Klemmenspannung des Synchrongenerators (20) detektiert,
einen Erreger (100), der einen Feldstrom an eine Feldwicklung des Synchrongenerators (20) ausgibt, und
eine Erregersteuereinheit (110), die den Erreger (100) auf der Basis einer Differenz zwischen der durch den Klemmenspannungsdetektor (59) detektierten Klemmenspannung und einem Befehlswert für die Klemmenspannung steuert.

5. Energieerzeugungsvorrichtung (1) vom Typ für erneuerbare Energien nach Anspruch 4, wobei die Erregersteuereinheit (110) den Erreger (100) so steuert, dass der Feldstrom erhöht wird, unmittelbar nachdem die Klemmenspannung des Synchrongenerators (20) aufgrund eines Störfalls in dem Energienetz (50) oder einer Übertragungsleitung von dem Synchrongenerator (20) zu dem Energienetz (50) abnimmt.

6. Energieerzeugungsvorrichtung (1) vom Typ für erneuerbare Energien nach Anspruch 5, wobei nach dem Erhöhen des Feldstroms durch den Erreger (100) die Erregersteuereinheit (110) den Erreger (100) so steuert, dass der Feldstrom erhöht wird, wenn ein interner Phasenwinkel des Synchrongenerators (20) größer wird, und verringert wird, wenn der interne Phasenwinkel des Synchrongenerators (20) kleiner wird.

7. Energieerzeugungsvorrichtung (1) vom Typ für erneuerbare Energien nach Anspruch 1, wobei der Akkumulator (64) mit der Hochdruckölleitung (16) über ein Magnetventil (66) verbunden ist, und das Magnetventil (66) veranlasst wird, so zu öffnen und zu schließen, dass es dem Akkumulator (66) ermöglichen kann, unmittelbar nach dem Eintreten des Störfalls in dem Energienetz (50) oder der Übertragungsleitung (54) mit der Hochdruckölleitung (16) in Strömungsverbindung zu kommen.

8. Energieerzeugungsvorrichtung (1) vom Typ für erneuerbare Energien nach Anspruch 1, wobei die Kraftübertragungssteuereinheit (40) umfasst:
eine Motor-Bedarfsbestimmungseinheit (47), die, im Störfallreaktionsmodus, einen Bedarf D_{M} der Förderleistung des Hydraulikmotors (14) auf der Basis der durch den Synchrongenerator (20) erzeugten Energie bestimmt, und
eine Motorsteuereinheit (48), die die Förderleistung des Hydraulikmotors (14) auf den Bedarf D_{M} justiert.

9. Energieerzeugungsvorrichtung (1) vom Typ für erneuerbare Energien nach Anspruch 8, ferner umfassend:
einen Anstellwinkelantriebsmechanismus, der einen Anstellwinkel des Blattes (4) justiert,
wobei der Anstellwinkelantriebsmechanismus den Anstellwinkel des Blattes (4) während des Störfalls in dem Energienetz (50) oder der Übertragungsleitung (54) in eine Segelstellung verstellt.

10. Energieerzeugungsvorrichtung (1) vom Typ für erneuerbare Energien nach Anspruch 9, wobei, nachdem die Wiederherstellung des Normalbetriebes nach dem Störfall begonnen hat, der Anstellwinkelantriebsmechanismus den Anstellwinkel des Blattes (4) in eine leichte Betriebsposition verstellt und die Motor-Bedarfsbestimmungseinheit (47) den Bedarf D_{M} an Förderleistung des Hydraulikmotors (14) erhöht, um die durch den Synchrongenerator (20) erzeugte Energie zu erhöhen.

11. Energieerzeugungsvorrichtung (1) vom Typ für erneuerbare Energien nach Anspruch 5, wobei der Störfall ein Zustand ist, in dem eine Spannung des Energienetzes (50) auf eine im Energienetz-Regelwerk angegebene Spannung oder darunter sinkt.

12. Energieerzeugungsvorrichtung (1) vom Typ für erneuerbare Energien nach Anspruch 4,
wobei die Erregersteuereinheit (110) einen Thyristor (116) enthält, der ein Statorfeld des Erregers (100) erregt,
wobei der Erreger (100) ein Wechselstromerreger ist, der das durch den Thyristor (116) erregte Statorfeld und einen sich mit der Welle (15) des Synchrongenerators (20) drehenden Rotoranker umfasst, wobei der Gleichstrom-Feldstrom von dem Rotoranker zu der Feldwicklung des Synchrongenerators (20) über einen Rotationsgleichrichter (103) zugeführt wird.

13. Energieerzeugungsvorrichtung (1) vom Typ für erneuerbare Energien nach Anspruch 12, ferner umfassend:
einen Hilfserreger, der einen Dauermagnetgenerator enthält, der an einer gemeinsamen Welle mit dem Synchrongenerator (20) angebracht ist,
wobei der Thyristor (116) der Erregersteuereinheit (110) den Hilfserreger als Energiequelle und zum Erregen des Statorfeldes des Erregers (100) verwendet.

14. Energieerzeugungsvorrichtung (1) vom Typ für erneuerbare Energien nach Anspruch 1, wobei die Energieerzeugungsvorrichtung ein Windturbinengenerator ist, der die Energie aus Wind als die erneuerbare Energie erzeugt.

15. Betriebsverfahren für eine Energieerzeugungsvorrichtung (1) vom Typ für erneuerbare Energien, die **dadurch gekennzeichnet ist, dass** sie umfasst: eine Drehwelle (8), die durch erneuerbare Energie gedreht wird, die über ein Blatt (4) empfangen wird, eine hydraulische Kraftübertragung (10), die eine Hydraulikpumpe (12), die von der Drehwelle (8) angetrieben wird, und einen Hydraulikmotor (14) umfasst, der durch von der Hydraulikpumpe (12) zugeführtes druckbeaufschlagtes Öl angetrieben wird, und einen Synchrongenerator (20), der durch den Hydraulikmotor (14) angetrieben wird, um Energie zu erzeugen, und der ohne einen zwischengeschalteten Frequenzwandlerkreis mit einem Energienetz (50) gekoppelt ist, wobei die erzeugte Energie in das Energienetz (50) eingespeist wird, wobei das Betriebsverfahren folgenden Schritt umfasst:
Veranlassen, dass die hydraulische Kraftübertragung (10) in einem normalen Betriebsmodus eine Förderleistung sowohl der Hydraulikpumpe (12) als auch des Hydraulikmotors (14) so einstellt, dass sich die Drehwelle (8) mit einer Drehzahl dreht, die mit Bezug auf die Fließgeschwindigkeit der erneuerbaren Energie variabel ist, während eine Drehzahl des Synchrongenerators (20) auf der Basis der Frequenz des Energienetzes (50) während des Normalbetriebes der Energieerzeugungsvorrichtung (1) auf einer Synchrongeschwindigkeit gehalten wird,
wobei das Verfahren **dadurch gekennzeichnet ist, dass** es des Weiteren folgende Schritte umfasst:
Veranlassen, dass die hydraulische Kraftübertragung (10) in einem Störfallreaktionsmodus die Förderleistung des Hydraulikmotors (14) so einstellt, dass eine Differenz zwischen einem Lastdrehmoment des Synchrongenerators (20) und einem Drehmoment, das durch den Hydraulikmotor (14) in den Synchrongenerator (20) eingespeist wird, abnimmt, und die Förderleistung der Hydraulikpumpe (12) mit Bezug auf die Förderleistung des Hydraulikmotors (14) überhöht wird, wenn eine Klemmenspannung des Synchrongenerators (20) aufgrund des Störfalls in einer Übertragungsleitung (54) von dem Energienetz (50) zu dem Synchrongenerator (20) oder dem Energienetz (50) abnimmt, und
Akkumulieren der Förderleistung der Hydraulikpumpe (12) auf einen überhöhten Wert mit Bezug auf die Förderleistung des Hydraulikmotors (14) in dem Akkumulator (16), der mit der Hochdruckölleitung (16) zwischen einem Auslass der Hydraulikpumpe (12) und einem Einlass des Hydraulikmotors (14) verbunden ist, wenn der Störfall in dem Energienetz (50) oder der Übertragungsleitung (54) eintritt.

16. Betriebsverfahren für eine Energieerzeugungsvorrichtung (1) vom Typ für erneuerbare Energien nach Anspruch 15, ferner umfassend den Schritt des:
Erhöhens eines Feldstroms, der zu einer Feldwicklung des Synchrongenerators (20) zu übertragen ist, unmittelbar nachdem eine Klemmenspannung des Synchrongenerators (20) aufgrund eines Störfalls in dem Energienetz (50) oder einer Übertragungsleitung (54) von dem Synchrongenerator (20) zu dem Energienetz (50) abnimmt.

17. Betriebsverfahren für eine Energieerzeugungsvorrichtung (1) vom Typ für erneuerbare Energien nach Anspruch 15 oder 16,
wobei der Akkumulator (64) mit der Hochdruckölleitung (16) über ein Magnetventil (66) verbunden ist und
wobei in dem Schritt des Akkumulierens der überhöhten Förderleistung der Hydraulikpumpe (12) in dem Akkumulator (64) das Magnetventil (66) unmittelbar nach dem Eintreten des Störfall in dem Energienetz (50) oder der Übertragungsleitung (54) geöffnet wird, damit der Akkumulator (64) mit der Hochdruckölleitung (16) in Strömungsverbindung treten kann.

## Revendications

1. Appareil de génération de courant du type à énergie renouvelable (1) qui génère un courant en utilisant une énergie renouvelable, comprenant :
une pale (4) ;
un arbre rotatif (8) qui est mis en rotation par l'énergie renouvelable reçue par l'intermédiaire de la pale (4) ;
une transmission hydraulique (10) qui comprend une pompe hydraulique (12) entraînée par l'arbre rotatif (8) et un moteur hydraulique (14) entraîné par l'huile sous pression délivrée par la pompe hydraulique (12) ;
une génératrice synchrone (20) qui est entraînée par le moteur hydraulique (14) pour générer un courant et couplée à un réseau de distribution (50) sans circuit de conversion de fréquence intermédiaire, le courant généré étant fourni au réseau de distribution (50) ;
un contrôleur de transmission (40) qui commande la transmission hydraulique (10) dans un mode de fonctionnement normal pour ajuster le déplacement de chacun de la pompe hydraulique (12) et du moteur hydraulique (14), de sorte que l'arbre rotatif (8) tourne à une vitesse de rotation qui varie en relation avec la vitesse d'écoulement de l'énergie renouvelable, tout en maintenant une vitesse de rotation de la génératrice synchrone (20) à une vitesse synchrone basée sur la fréquence du réseau de distribution (50) pendant le fonctionnement normal de l'appareil de génération de courant (1),
une ligne hydraulique haute pression (16) reliant une sortie de la pompe hydraulique (12) à une entrée du moteur hydraulique (14), et
un accumulateur (64) relié à la ligne hydraulique haute pression (16),
**caractérisé en ce que** ledit contrôleur de transmission (40) commande la transmission hydraulique (10) dans un mode de réponse à un événement d'anomalie pour ajuster le déplacement du moteur hydraulique (14) de sorte qu'une différence entre un couple de charge de la génératrice synchrone (20) et un couple appliqué à la génératrice synchrone (20) par le moteur hydraulique (14) diminue, et que le déplacement de la pompe hydraulique (12) devienne excessif par rapport au déplacement du moteur hydraulique (14), lorsqu'une tension aux bornes de la génératrice synchrone (20) diminue du fait de l'événement d'anomalie au niveau de la ligne de transmission (54) du réseau de distribution (50) à la génératrice synchrone (20) ou au niveau du réseau de distribution (50),
et **en ce que** le déplacement de la pompe hydraulique (12) qui est excessif par rapport au déplacement du moteur hydraulique (14) est accumulé dans l'accumulateur (64) lorsque l'événement d'anomalie se produit au niveau du réseau de distribution (50) ou de la ligne de transmission (54).

2. Appareil de génération de courant du type à énergie renouvelable (1) selon la revendication 1, dans lequel le contrôleur de transmission (40) comprend :
une unité de détermination de couple cible (42) qui, dans le mode de fonctionnement normal, détermine un couple cible de la pompe hydraulique (12) sur la base d'un couple optimal de l'arbre rotatif (8) en fonction de la vitesse d'écoulement de l'énergie renouvelable ;
une unité de détermination de demande de pompe (43) qui, dans le mode de fonctionnement normal, détermine une demande D_{P} du déplacement de la pompe hydraulique (12) à partir du couple cible de la pompe hydraulique (12) ; et
une unité de commande de pompe (44) qui ajuste le déplacement de la pompe hydraulique à la demande D_{P}.

3. Appareil de génération de courant du type à énergie renouvelable (1) selon la revendication 1 ou 2, dans lequel le contrôleur de transmission (40) comprend :
une unité de détermination de puissance cible de moteur (46) qui détermine une puissance de sortie cible POWER_{M} du moteur hydraulique (14) sur la base d'une puissance de sortie cible POWER_{P} de la pompe hydraulique (12) ;
une unité de détermination de demande de moteur (47) qui, dans le mode de fonctionnement normal, détermine une demande D_{M} du déplacement du moteur hydraulique (14) sur la base de la puissance de sortie cible POWER_{M} déterminée de sorte que la génératrice synchrone (20) tourne à la vitesse synchrone ; et
une unité de commande de moteur (48) qui ajuste le déplacement du moteur hydraulique (14) à la demande D_{M}.

4. Appareil de génération de courant du type à énergie renouvelable (1) selon l'une quelconque des revendications 1 à 3, comprenant en outre :
un détecteur de tension aux bornes (59) qui détecte une tension aux bornes de la génératrice synchrone (20) ;
une excitatrice (100) qui délivre un courant d'induction à un enroulement inducteur de la génératrice synchrone (20) ; et
un contrôleur d'excitatrice (110) qui commande l'excitatrice (100) sur la base d'une différence entre la tension aux bornes détectée par le détecteur de tension aux bornes (59) et une valeur de commande pour la tension aux bornes.

5. Appareil de génération de courant du type à énergie renouvelable (1) selon la revendication 4, dans lequel le contrôleur d'excitatrice (110) commande l'excitatrice (100) de sorte que le courant d'induction soit augmenté immédiatement après que la tension aux bornes de la génératrice synchrone (20) a diminué du fait d'un événement d'anomalie au niveau du réseau de distribution (50) ou d'une ligne de transmission de la génératrice synchrone (20) au réseau de distribution (50).

6. Appareil de génération de courant du type à énergie renouvelable (1) selon la revendication 5, dans lequel, après l'augmentation du courant d'induction par l'excitatrice (100), le contrôleur d'excitatrice (110) commande l'excitatrice (100) de sorte que le courant d'induction soit augmenté lorsqu'un angle de phase interne de la génératrice synchrone (20) augmente et soit diminué lorsque l'angle de phase interne de la génératrice synchrone (20) diminue.

7. Appareil de génération de courant du type à énergie renouvelable (1) selon la revendication 1, dans lequel ledit accumulateur (64) est relié à ladite ligne hydraulique haute pression (16) par l'intermédiaire d'une électrovanne (66), et ladite électrovanne (66) est commandée pour être ouverte et fermée de manière à être capable de permettre à l'accumulateur (66) de communiquer avec la ligne hydraulique haute pression (16) immédiatement après l'apparition de l'événement d'anomalie au niveau du réseau de distribution (50) ou de la ligne de transmission (54).

8. Appareil de génération de courant du type à énergie renouvelable (1) selon la revendication 1, dans lequel le contrôleur de transmission (40) comprend :
une unité de détermination de demande de moteur (47) qui, dans le mode de réponse à un événement d'anomalie, détermine une demande D_{M} du déplacement du moteur hydraulique (14) sur la base du courant généré par la génératrice synchrone (20) ; et
une unité de commande de moteur (48) qui ajuste le déplacement du moteur hydraulique (14) à la demande D_{M}.

9. Appareil de génération de courant du type à énergie renouvelable (1) selon la revendication 8, comprenant en outre :
un mécanisme de commande de pas qui ajuste un angle de pas de la pale (4),
dans lequel le mécanisme de commande de pas change l'angle de pas de la pale (4) vers une position de mise en drapeau pendant l'événement d'anomalie au niveau du réseau de distribution (50) ou de la ligne de transmission (54).

10. Appareil de génération de courant du type à énergie renouvelable (1) selon la revendication 9, dans lequel, après que la récupération de l'événement d'anomalie a débuté, le mécanisme de commande de pas modifie l'angle de pas de la pale (4) vers une position petit pas et l'unité de détermination de demande de moteur (47) augmente la demande D_{M} du déplacement du moteur hydraulique (14) pour augmenter le courant généré par la génératrice synchrone (20).

11. Appareil de génération de courant du type à énergie renouvelable (1) selon la revendication 5, dans lequel l'événement d'anomalie est une condition dans laquelle une tension du réseau de distribution (50) chute à une tension spécifiée dans un code de réseau de distribution ou moins.

12. Appareil de génération de courant du type à énergie renouvelable (1) selon la revendication 4,
dans lequel le contrôleur d'excitatrice (110) comprend un thyristor (116) qui excite un champ de stator de l'excitatrice (100),
dans lequel l'excitatrice (100) est une excitatrice à courant alternatif qui comprend le champ de stator excité par le thyristor (116) et un induit de rotor tournant avec l'arbre (15) de la génératrice synchrone (20), le courant d'induction continu étant délivré par l'induit de rotor à l'enroulement inducteur de la génératrice synchrone (20) par l'intermédiaire d'un redresseur rotatif (103).

13. Appareil de génération de courant du type à énergie renouvelable (1) selon la revendication 12, comprenant en outre :
une excitatrice auxiliaire qui comprend une génératrice à aimants permanents fixée à un arbre commun avec la génératrice synchrone (20),
dans lequel le thyristor (116) du contrôleur d'excitatrice (110) utilise l'excitatrice auxiliaire en tant que source de courant et excite le champ de stator de l'excitatrice (100).

14. Appareil de génération de courant du type à énergie renouvelable (1) selon la revendication 1, dans lequel l'appareil de génération de puissance est une génératrice éolienne qui génère la puissance à partir du vent en tant qu'énergie renouvelable.

15. Procédé de mise en oeuvre d'un appareil de génération de courant du type à énergie renouvelable (1) qui est **caractérisé en ce qu'**il comprend : un arbre rotatif (8) mis en rotation par l'énergie renouvelable reçue par l'intermédiaire d'une pale (4) ; une transmission hydraulique (10) qui comprend une pompe hydraulique (12) entraînée par l'arbre rotatif (8) et un moteur hydraulique (14) entraîné par l'huile sous pression délivrée par la pompe hydraulique (12) ; et une génératrice synchrone (20) qui est entraînée par le moteur hydraulique (14) pour générer un courant et couplée à un réseau de distribution (50) sans circuit de conversion de fréquence intermédiaire, le courant généré étant fourni au réseau de distribution (50), le procédé de fonctionnement comprenant l'étape :
de commande de la transmission hydraulique (10) dans un mode de fonctionnement normal pour ajuster le déplacement de chacun de la pompe hydraulique (12) et du moteur hydraulique (14) de sorte que l'arbre rotatif (8) tourne à une vitesse de rotation qui varie en relation avec la vitesse d'écoulement de l'énergie renouvelable tout en maintenant une vitesse de rotation de la génératrice synchrone (20) à une vitesse synchrone basée sur la fréquence du réseau de distribution (50) pendant le fonctionnement normal de l'appareil de génération de courant (1) ;
le procédé étant **caractérisé en ce qu'**il comprend en outre les étapes :
de commande de la transmission hydraulique (10) dans un mode de réponse à un événement d'anomalie pour ajuster le déplacement du moteur hydraulique (14) de sorte qu'une différence entre un couple de charge de la génératrice synchrone (20) et un couple appliqué à la génératrice synchrone (20) par le moteur hydraulique (14) diminue, et que le déplacement de la pompe hydraulique (12) devienne excessif par rapport au déplacement du moteur hydraulique (14), lorsqu'une tension aux bornes de la génératrice synchrone (20) diminue du fait de l'événement d'anomalie au niveau d'une ligne de transmission (54) de la génératrice synchrone (20) au réseau de distribution (50) ou au niveau du réseau de distribution, et
d'accumulation du déplacement de la pompe hydraulique (12) en excès par rapport au déplacement du moteur hydraulique (14) dans l'accumulateur (16) relié à la ligne hydraulique haute pression (16) entre une sortie de la pompe hydraulique (12) et une entrée du moteur hydraulique (14) lorsque l'événement d'anomalie se produit au niveau du réseau de distribution (50) ou de la ligne de transmission (54).

16. Procédé de mise en oeuvre d'un appareil de génération de courant du type à énergie renouvelable (1) selon la revendication 15, comprenant en outre l'étape :
d'augmentation d'un courant d'induction à délivrer à un enroulement inducteur de la génératrice synchrone (20) immédiatement après qu'une tension aux bornes de la génératrice synchrone (20) a diminué du fait d'un événement d'anomalie au niveau du réseau de distribution (50) ou d'une ligne de transmission (54) de la génératrice synchrone (20) au réseau de distribution (50).

17. Procédé de mise en oeuvre d'un appareil de génération de courant du type à énergie renouvelable (1) selon la revendication 15 ou 16,
dans lequel ledit accumulateur (64) est relié à ladite ligne hydraulique haute pression (16) par l'intermédiaire d'une électrovanne (66), et
dans lequel, à l'étape d'accumulation du déplacement excessif de la pompe hydraulique (12) dans l'accumulateur (64), l'électrovanne (66) est ouverte immédiatement après l'apparition de l'événement d'anomalie au niveau du réseau de distribution (50) ou de la ligne de transmission (54) de manière à permettre à l'accumulateur (64) de communiquer avec la ligne hydraulique haute pression (16).
